# EUROPEAN PATENT APPLICATION

(11) **EP 4 840 902 A1**
(43) Date of publication of application: **18.11.2026**
(21) Application number: 25782944.0
(22) Date of filing: 01.04.2025
(51) Int. Cl.: C08L 23/0807, C08F 210/16, C08J 5/18, B29C 55/12

(54) **POLYETHYLENE RESIN COMPOSITION AND BIAXIALLY STRETCHED FILM COMPRISING SAME**

(30) Priority: 02.04.2024 KR 20240044703; 31.03.2025 KR 20250041093
(71) Applicant: LG Chem, Ltd., Seoul 07336 (KR)
(72) Inventor: SUNG, Yutaek, Daejeon 34122 (KR); KWON, Kyung An, Daejeon 34122 (KR); LEE, Sanghwa, Daejeon 34122 (KR); YOU, Youngsuk, Daejeon 34122 (KR); KIM, Taejin, Daejeon 34122 (KR); KIM, Inkyo, Daejeon 34122 (KR); CHOI, Eun Yeob, Daejeon 34122 (KR)
(74) Representative: Goddar, Heinz J.
(86) International application number: PCT/KR2025/004262
(87) International publication number: WO 2025/211711

(57) **Abstract**

Provided are a polyethylene resin composition capable of preventing occurrence of surface defects when manufacturing a biaxially stretched film by improving melt fracture, and a biaxially stretched film including the same.

## Description

### [Technical Field]

### Cross-reference to Related Applications

The present application is based on, and claims priority from, Korean Patent Application Nos. 10-2024-0044703 and 10-2025-0041093, filed on April 2, 2024 and March 31, 2025, respectively, the disclosures of which are hereby incorporated by reference herein in their entirety.

The present invention relates to a polyethylene resin composition capable of preventing surface defects when manufacturing a biaxially stretched film by improving melt fracture, and a biaxially stretched film including the same.

### [Background Art]

Thin film products made of linear low density polyethylene (LLDPE) or high density polyethylene (HDPE) are widely used in packaging such as merchandise bags, grocery bags, food and specialty packaging, and industrial liners. In these applications, a shrink film capable of packaging the product while maintaining its shape is mainly used to protect the product from being touched during display.

In particular, among these shrink films, biaxially stretched polymer films have excellent mechanical properties, productivity, and printability, etc., and thus are widely used in packaging. Commercially available packaging films generally use bi-axially oriented polypropylene (BOPP), biaxially-oriented polyethylene terephthalate (BOPET), or biaxially-oriented polyamide (BOPA) for a printing layer, and use LLDPE for a sealing layer. These composite materials cannot be recycled, and the demand for a single material is increasing due to regulations on recycling of packaging materials. Therefore, research and development is being conducted to manufacture a single-material packaging film by replacing the film of the printing layer with a biaxially-oriented polyethylene (BOPE) film.

However, commercially available polyethylene (PE) resins do not have sufficient stretching stability, and phenomena such as fracture, melting, etc. occur during stretching, making it difficult to apply them to the biaxial stretching process. Therefore, in order to secure stretching stability, a product in the form of a polyethylene resin composition containing a resin having a low density and a high melt index has been developed. However, the composition as described above is unsuitable as a PE resin for biaxially stretched film due to low stiffness, shrinkage, and impact resistance, etc.

Accordingly, research and development is required for a PE resin that has a molecular structure favorable to stretching, thereby exhibiting excellent stretching stability when manufacturing a biaxially stretched film, while capable of improving the surface properties of the film.

### [Disclosure of Invention]

### [Technical Problem]

There are provided a polyethylene resin composition capable of preventing occurrence of surface defects when manufacturing a biaxially stretched film by improving melt fracture, and a biaxially stretched film including the same.

### [Technical Solution]

There is provided a polyethylene resin composition including one or more polyethylenes and satisfying the following requirements of (a1) to (a4):
(a1) a melt flow rate ratio (MI_{21.6}/MI_{2.16}, ASTM D1238, 190°C): 60 to 120
(a2) a density (ASTM D1505): 0.920 g/cm³ to 0.950 g/cm³
(a3) a molecular weight distribution: 5.50 to 15.00
(a4) a molecular weight distribution type when a molecular weight distribution curve is plotted using a logarithmic value (logMw) of a weight average molecular weight (Mw) (g/mol) on the x-axis and a molecular weight distribution (dW/dlogMw) with respect to the logarithmic value on the y-axis through gel permeation chromatography analysis: unimodal.

Further, there is also provided a biaxially stretched film including the above polyethylene resin composition.

Hereinafter, the polyethylene resin composition and the biaxially stretched film according to embodiments of the present invention will be described in detail.

The terminology used herein is for the purpose of describing exemplary embodiments only and is not intended to be limiting of the present invention.

The singular forms are intended to include the plural forms as well, unless the context clearly indicates otherwise.

In this specification, the terminology "include," "comprise," or "have" is used to describe stated features, numbers, steps, components, or combination thereof, and do not preclude the addition of one or more other features, numbers, steps, components, or combinations thereof.

Further, throughout the present specification, a term of a degree, such as "about" or "substantially", is used in a corresponding numerical value or used to mean close to the numerical value when inherent manufacturing and material allowable errors are presented in a described meaning, and is used to prevent an unconscientious infringer from illegally using disclosed contents including a numerical value illustrated as being accurate or absolute in order to help understanding of the present invention.

Further, in the present specification, the (co)polymer is meant to include both a homopolymer and a co-polymer.

Unless otherwise defined herein, "copolymerization" may mean block copolymerization, random copolymerization, graft copolymerization, or alternating copolymerization, and "copolymer" may mean a block copolymer, a random copolymer, a graft copolymer, or an alternating copolymer.

Further, "parts by weight", as used herein, refers to a relative concept of a ratio of the weight of the material based on the weight of a specific material. For example, in a mixture containing 50 g of material A, 20 g of material B, and 30 g of material C, the amounts of material B and material C based on 100 parts by weight of material A are 40 parts by weight and 60 parts by weight, respectively.

Meanwhile, "% by weight" refers to an absolute concept of expressing the weight of a specific material in percentage based on the total weight. In the above-described mixture, the contents of material A, material B, and material C based on 100% of the total weight of the mixture are 50% by weight, 20% by weight, and 30% by weight, respectively.

The present invention may be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

### (Polyethylene resin composition)

The present invention relates to a polyethylene resin composition having improved melt fracture, particularly, shark skin melt fracture characteristics.

Melt fracture or melting fracture refers to a phenomenon in which an extrudate has the irregular surface when the processing linear velocity increases, during extrusion processing of a polyethylene resin composition. Specifically, when the processing linear velocity increases, shear stress increases, and when the shear stress exceeds a critical value, the surface contact between the polymer melt and a processing device such as a die becomes poor, resulting in cohesion failure. When this phenomenon occurs, defects occur on the surface of the product.

The present inventors found that melt fracture occurs when the viscosity of the resin composition in the processing area is high, which may represent shear stress when the processing linear velocity increases, and they have improved melt fracture, particularly, shark skin melt fracture characteristics, by controlling the molecular structure within the resin composition.

Specifically, the polyethylene resin composition according to the present invention includes one or more polyethylenes and satisfies the following requirements of (a1) to (a4):
(a1) a melt flow rate ratio (MI_{21.6}/MI_{2.16}, ASTM D1238, 190°C): 60 to 120
(a2) a density (ASTM D1505): 0.920 g/cm³ to 0.950 g/cm³
(a3) a molecular weight distribution: 5.50 to 15.00
(a4) a molecular weight distribution type when a molecular weight distribution curve is plotted using a logarithmic value (logMw) of a weight average molecular weight (Mw) (g/mol) on the x-axis and a molecular weight distribution (dW/dlogMw) with respect to the logarithmic value on the y-axis through gel permeation chromatography analysis: unimodal.

Specifically, the polyethylene resin composition according to the present invention represents a melt flow rate ratio (MFRR, MI_{21.6}/MI_{2.16}) of 60 to 120. When the MFRR is less than 60, physical properties, particularly, stiffness in the MD direction, may deteriorate during the production of the stretched film, and when the MFRR exceeds 120, toughness and transparency of the stretched film may deteriorate. More specifically, the MFRR of the polyethylene resin composition may be 60 or more, or 70 or more, or 75 or more, or 79 or more, or 80 or more, or 85 or more, or 88 or more, and 120 or less, or 100 or less, or 95 or less, or 90 or less, or 89.5 or less, or 89 or less.

In the present invention, the MFRR of the polyethylene resin composition is calculated by measuring the melt index (MI_{21.6}) at a temperature of 190°C under a load of 21.6 kg and the melt index (MI_{2.16}) at a temperature of 190°C under a load of 2.16 kg in accordance with the ASTM D1238 standard, respectively and then dividing the measured MI_{21.6} by MI_{2.16}.

In addition, the polyethylene resin composition has a density of 0.920 g/cm³ to 0.950 g/cm³, together with the melt characteristics described above. When the density is less than 0.920 g/cm³, physical properties, particularly, stiffness in the TD direction, may deteriorate during the production of the stretched film, and when the density exceeds 0.950 g/cm³, film processability and stretchability may deteriorate due to the excessively high density. More specifically, the density of the polyethylene resin composition may be 0.920 g/cm³ or more, or 0.930 g/cm³ or more, or 0.932 g/cm³ or more, or 0.935 g/cm³ or more, and 0.950 g/cm³ or less, or 0.945 g/cm³ or less, or 0.940 g/cm³ or less.

In the present invention, the density (g/cm³) of the polyethylene resin composition may be measured in accordance with the American Society for Testing and Materials standard ASTM D 1505. The detailed measurement method is as described in Experimental Example below.

Meanwhile, when the viscosity is low at the linear velocity of the processing area, melt fracture may be suppressed. The viscosity in the processing area may be lowered by introducing long chain branches (LCB) into the polymer, or by broadening the molecular weight distribution (PDI) of the resin composition to a certain level or more. Usually, as the method of broadening the PDI, a polymerization method is controlled, or a method of mixing with a polymer is used. In the present invention, the resin composition has a broad PDI through a method of mixing two or more polymers. Specifically, the polyethylene resin composition according to the present invention has a molecular weight distribution (PDI) of 5.50 to 15.00. When the PDI is less than 5.50, the viscosity in the processing area greatly increases due to an excessively narrow molecular weight distribution, and when the molecular weight distribution exceeds 15.00, the viscosity in the processing area greatly decreases, and thus the film processability and stretchability may deteriorate. More specifically, the PDI of the polyethylene resin composition is 5.50 or more, or 5.54 or more, or 5.60 or more, or 6.00 or more, or 6.40 or more, and 15.00 or less, or 10.00 or less, or 7.00 or less, or 6.70 or less, or 6.65 or less.

Meanwhile, in the present invention, the molecular weight distribution (PDI) of the polyethylene resin composition may be calculated by dividing a weight average molecular weight (Mw) (g/mol) by a number average molecular weight (Mn) (g/mol), and the weight average molecular weight and the number average molecular weight may be determined by gel permeation chromatography (GPC) analysis, and they are each a value converted with standard polystyrene. The detailed measurement method and conditions thereof are as described in Experimental Example below.

Further, the polyethylene resin composition according to the present invention has, together with the broad molecular weight distribution as described above, a unimodal molecular weight distribution curve, when the molecular weight distribution curve is plotted, from the results of GPC analysis, using a logarithmic value (logMw) of a weight average molecular weight (Mw) (g/mol) on the x-axis and a molecular weight distribution (dW/dlogMw) with respect to the logarithmic value on the y-axis.

In the traditional polyethylene resin compositions, the molecular structure form favorable to biaxial stretching is strengthened, along with the improvement of physical properties, through selective increase of the distribution (or content) of a low-molecular-weight polymer and a high-molecular-weight polymer. Accordingly, the molecular weight distribution curve exhibits a bimodal form during GPC analysis.

In contrast, the polyethylene resin composition according to the present invention exhibits a unimodal molecular weight distribution.

Bimodal polyethylene resin compositions are known to exhibit different melt fracture tendencies from unimodal polyethylene resin compositions, due to a difference in the molecular structure according to a ratio of high- and low-molecular-weight polymers (J Rheol., 57, 393(2013)). As the low-molecular-weight polymer increases, processability improves, which is advantageous in terms of fracture tendency. In addition, even though the same level of the low-molecular-weight polymer is contained, the unimodal molecular weight distribution exhibits the delayed fracture tendency, as compared to the bimodal molecular weight distribution, due to the good miscibility of the high- and low-molecular-weight polymers.

Since the polyethylene resin composition according to the present invention has a unimodal molecular weight distribution along with a broad PDI, melt fracture does not occur even under high shear stress.

Meanwhile, in the present invention, the molecular weight distribution curve of the polyethylene resin composition is plotted by performing gel permeation chromatography analysis as described above, and then using the logarithmic value (logMw) of the weight average molecular weight (Mw) (g/mol) on the x-axis and the molecular weight distribution (dW/dlog Mw) with respect to the logarithmic value on the y-axis. The detailed analysis method is as described in Experimental Example below.

In addition, the polyethylene resin composition may have a weight average molecular weight (Mw) of 110,000 g/mol to 130,000 g/mol along with the above-described molecular weight distribution characteristics.

The Mw of the polyethylene resin composition affects the stretchability and physical properties. As the polyethylene resin composition has the Mw in the above-mentioned range, it may exhibit excellent stretchability during film production, and the physical properties of the produced film, particularly, stiffness may be improved. More specifically, the Mw of the polyethylene resin composition may be 110,000 g/mol or more, or 110,500 g/mol or more, or 115,000 g/mol or more, or 117,000 g/mol or more, and 130,000 g/mol or less, or 125,000 g/mol or less, or 121,000 g/mol or less, or 120,900 g/mol or less.

Further, the polyethylene resin composition may have a complex viscosity of 400 Pa·s or less, as measured under conditions of 230°C and 500 rad/s using a rotational rheometer. More specifically, the polyethylene resin composition may have a complex viscosity of 400 Pa·s or less or 350 Pa·s or less, or 345 Pa·s or less, and 300 Pa·s or more, or 330 Pa·s or more, or 340 Pa·s or more, or 344 Pa·s or more, as measured under the conditions as described above.

Further, the polyethylene resin composition may have a shear viscosity of 300 Pa·s or less, as measured under conditions of 230°C and 1000 s⁻¹ using a capillary rheometer. More specifically, the polyethylene resin composition has a shear viscosity of 300 Pa·s or less or 295 Pa·s or less, or 293 Pa·s or less, and 200 Pa·s or more, or 250 Pa·s or more, or 270 Pa·s or more, or 272 Pa·s or more, or 285 Pa·s or more, or 289 Pa·s or more, as measured under the conditions described above.

The complex viscosity of the polyethylene resin composition refers to a viscosity when the deformation is in the form of oscillation, and the shear viscosity refers to a viscosity when the deformation is in one direction. The resin composition of the present invention may exhibit excellent film stretchability by having the complex viscosity and/or shear viscosity in the above range.

The polyethylene resin composition satisfying the above property requirements exhibits improved melt fracture characteristics in which the melt fracture on-set shear rate is delayed and melt fracture does not occur even at high shear stress.

Specifically, when the polyethylene resin composition is measured for shear viscosity while changing the shear rate at 230°C using a capillary rheometer, melt fracture (melt fracture on-set) occurs at a shear rate of 1000 s⁻¹ or more. As described, the shear rate at the onset of melt fracture is defined as the Shear rate_{onset of M.F}, and the Shear rate_{onset of M.F} of the polyethylene resin composition according to the present invention is 1000 s⁻¹ or more. Since the higher Shear rate_{onset of M.F} value is better, the upper limit thereof is not particularly limited, and may be, for example, 100,000 s⁻¹ or less, or 10,000 s⁻¹ or less.

Further, the polyethylene resin composition has a melt fracture on-set stress (MF_{on_set} Stress) of 265,000 Pa or more, as measured at 230°C using a capillary rheometer. Since the higher MF_{on_set} Stress value is better, the upper limit thereof is not particularly limited, and may be, for example, 1,000,000 Pa or less, or 500,000 Pa or less.

Meanwhile, in the present invention, the Shear rate_{onset of M.F} and MF_{on_set} Stress of the polyethylene resin composition may be measured using a capillary rheometer, and the detailed measurement methods and conditions thereof are as described in Experimental Example 1 below.

Further, the polyethylene resin composition according to the present invention may have a Bimodal Triangular Area (BMTA) of 0.05 to 0.15, determined from GPC analysis.

The BMTA corresponds to a triangular area formed by connecting three coordinates on the GPC curve measured in accordance with the ASTM D 6474 standard, in which the three coordinates are each defined by the maximum intensity coordinate (X-axis: a, Y-axis: d) of the largest peak (Peak_{low}) among the low molecular weight fractions having a log Mw of less than 5.0 of the peak maximum intensity, the maximum intensity coordinate (X-axis: b, Y-axis: e) of the largest peak (Peak_{high}) among the high molecular weight fractions having a log Mw of 5.0 or more of the peak maximum intensity, and the coordinate (X-axis: c, Y-axis: f) of the intersection point of the low molecular weight fraction including Peak_{low} and the high molecular weight fraction including Peak_{high}. In other words, the area of the BMTA, which is the area of the triangle connecting the maximum intensity coordinate (X-axis: a, Y-axis: d) of Peak_{low}, the maximum intensity coordinate (X-axis: b, Y-axis: e) of Peak_{high}, and the coordinate (X-axis: c, Y-axis: f) of the intersection point of these coordinates, may be determined by the following Equation 1. [Equation 1] $BMTA = \frac{1}{2} \left|\left(ae+bf+cd\right)-\left(db+ec+fa\right)\right|$ in Equation 1,
ae represents the product of the maximum intensity X-axis coordinate value of the low molecular weight fraction and the maximum intensity Y-axis coordinate value of the high molecular weight fraction,
bf represents the product of the maximum intensity X-axis coordinate value of the high molecular weight fraction and the Y-axis coordinate value of the intersection point,
cd represents the product of the X-axis coordinate value of the intersection point and the maximum intensity Y-axis coordinate value of the low molecular weight fraction,
db represents the product of the maximum intensity Y-axis coordinate value of the low molecular weight fraction and the maximum intensity X-axis coordinate value of the high molecular weight fraction,
ec represents the product of the maximum intensity Y-axis coordinate value of the high molecular weight fraction and the X-axis coordinate value of the intersection point, and
fa represents the product of the Y-axis coordinate value of the intersection point and the maximum intensity X-axis coordinate value of the low molecular weight fraction.

A larger BMTA value indicates a higher degree of bimodal separation between the low molecular weight fraction and the high molecular weight fraction on the GPC curve, meaning that the low molecular weight region is larger, and accordingly, indicating excellent processability. The polyethylene composition according to the present invention may specifically have a BMTA of 0.06 or more, or 0.07 or more, or 0.08 or more, or 0.09 or more. However, when the BMTA value is excessively large, it is difficult to form a crystalline framework when manufacturing a biaxially stretched film, thereby deteriorating the mechanical properties, and therefore, the BMTA value may be preferably 0.3 or less, or 0.25 or less, or 0.2 or less, 0.15 or less, or 0.12 or less.

Meanwhile, in the present invention, with regard to BMTA, a weight average molecular weight (Mw, g/mol) is measured in accordance with the American Society for Testing and Materials ASTM D 6474 standard using gel permeation chromatography, and on a logarithmic plot for the weight average molecular weight (Mw) of the polyethylene resin composition thus measured, i.e., on a GPC curve in which the x-axis is log M_{W} and the y-axis is dw/dlogMw, the area of BMTA may be determined. The method of determining BMTA is as described in Experimental Example below.

Meanwhile, the melt index (MI_{2.16}) of the polyethylene resin composition affects the film processability and stretchability. When the melt index of the polyethylene resin composition is too low, there is a concern that the film processability and stretchability may deteriorate due to the excessively low melt index. On the contrary, when the melt index is too high, there is a concern that the processability may deteriorate, and the physical properties of the manufactured stretched film may deteriorate.

The polyethylene resin composition according to the present invention exhibits a melt index (MI_{2.16}) of 0.10 g/10 min to 2.00 g/10 min. Accordingly, it exhibits excellent film processability and stretchability, and the physical properties of the stretched film to be manufactured may also be improved. In particular, by simultaneously satisfying the density requirements described below, the polyethylene resin composition may exhibit more excellent biaxial stretchability. More specifically, the melt index of the polyethylene resin composition according to the present invention may be 0.10 g/10 min or more, or 0.30 g/10 min or more, or 0.50 g/10 min or more, and 2.00 g/10 min or less, or 1.00 g/10 min or less, or 0.80 g/10 min or less, or 0.70 g/10 min or less, or 0.65 g/10 min or less or 0.60 g/10 min or less.

Meanwhile, in the present invention, the melt index (MI_{2.16}) of the polyethylene resin composition may be measured at 190°C under a load of 2.16 kg in accordance with to the American Society for Testing and Materials standard ASTM D1238 (condition E). The detailed measurement method is as described in Experimental Example below.

The polyethylene resin composition described above includes one or more ethylene-alpha olefin copolymers, and more specifically, one or more ethylene-alpha olefin copolymers.

Specifically, the polyethylene resin composition includes:
(a) a first ethylene-alpha olefin copolymer having a density of 0.870 g/cm³ to 0.920 g/cm³ and a number average molecular weight Mn of 20,000 g/mol or more, and
(b) a second ethylene-alpha olefin copolymer having a density of 0.945 g/cm³ to 0.960 g/cm³ and a number average molecular weight Mn of 10,000 g/mol or more and less than 20,000 g/mol;
wherein the first ethylene-alpha olefin copolymer and the second ethylene-alpha olefin copolymer are different from each other.

In addition, by combining the first and second ethylene-alpha olefin copolymers in appropriate amounts, the polyethylene resin composition according to the present invention may satisfy the excellent overall physical properties described above.

Specifically, the first ethylene-alpha olefin copolymer may be included in an amount of 10% by weight to 40% by weight, and the second ethylene-alpha olefin copolymer may be included in an amount of 60% by weight to 90% by weight, based on the total weight of the polyethylene resin composition according to the present invention.

More specifically, the first ethylene-alpha olefin copolymer may be included in an amount of 10% by weight or more, or 15% by weight or more, or 17% by weight or more, and 40% by weight or less, or 35% by weight or less, or 30% by weight or less, or 20% by weight or less, based on the total weight of the polyethylene resin composition.

Further, the second ethylene-alpha olefin copolymer may be included in an amount of 60% by weight or more, or 65% by weight or more, or 70% by weight or more, or 80% by weight or more, and 90% by weight or less, or 85% by weight or less, or 83% by weight or less, based on the total weight of the polyethylene resin composition.

In addition, in the polyethylene resin composition, the first and second ethylene-alpha olefin copolymers are each a copolymer of ethylene and an alpha olefin having 3 to 20 carbon atoms, and more specifically, a copolymer of ethylene and 1-butene, 1-hexene, or 1-octene. In this regard, the alpha olefins included in the first and second ethylene-alpha olefin copolymers are different from each other.

More specifically, the first ethylene-alpha olefin copolymer may be an ethylene/1-octene copolymer, and the second ethylene-alpha olefin copolymer may be an ethylene/1-hexene copolymer.

### (a) First ethylene-alpha olefin copolymer

First, in the polyethylene composition according to the present invention, the first ethylene-alpha olefin copolymer has excellent flowability, thereby providing characteristics suitable for manufacturing a biaxially stretched film, such as excellent stretching stability and high shrinkage resistance.

Specifically, the first ethylene-alpha olefin copolymer has a density of 0.870 g/cm³ to 0.920 g/cm³, and a number average molecular weight Mn of 20,000 g/mol or more.

More specifically, the density of the first ethylene-alpha olefin copolymer may be 0.880 g/cm³ or more, or 0.890 g/cm³ or more, or 0.895 g/cm³ or more, or 0.900 g/cm³ or more, and 0.915 g/cm³ or less, or 0.910 g/cm³ or less, or 0.905 g/cm³ or less.

Further, the number average molecular weight Mn of the first ethylene-alpha olefin copolymer may be more specifically 20,000 g/mol or more, or 22,000 g/mol or more, or 25,000 g/mol or more, or 28,000 g/mol or more, or 30,000 g/mol or more, and 34,000 g/mol or less, or 33,000 g/mol or less, or 32,000 g/mol or less.

In addition, the first ethylene-alpha olefin copolymer may have a melt index (MI_{2.16}, ASTM D1238, 190°C, under a load of 2.16 kg) of 3.0 g/10 min to 10.0 g/10 min, a weight average molecular weight Mw of 60,000 g/mol or more and less than 95000 g/mol, and a molecular weight distribution Mw/Mn of 2.0 or more and less than 3.5, while satisfying the above-described density and number average molecular weight requirements.

More specifically, the melt index (MI_{2.16}, ASTM D1238, 190°C, under a load of 2.16 kg) of the first ethylene-alpha olefin copolymer may be 3.5 g/10 min or more, or 4.0 g/10 min or more, or 4.5 g/10 min or more, or 6.0 g/10 min or more, and 9.0 g/10 min or less, or 8.0 g/10 min or less, or 7.0 g/10 min or less.

Further, the weight average molecular weight Mw of the first ethylene-alpha olefin copolymer may be more specifically 60,000 g/mol or more, or 62,000 g/mol or more, or 64,000 g/mol or more, or 65,000 g/mol or more, or 68,000 g/mol or more, and less than 95,000 g/mol, or 90,000 g/mol or less, or 80,000 g/mol or less, or 70,000 g/mol or less.

Further, the molecular weight distribution Mw/Mn of the first ethylene-alpha olefin copolymer may be more specifically 2.0 or more, or 2.1 or more, or 2.2 or more, or 2.3 or more, and less than 3.5, or 3.2 or less, or 3.0 or less, or 2.8 or less, or 2.5 or less.

The first ethylene-alpha olefin copolymer may have at least any one of the above-described properties, and may have all of the above-described physical properties in order to exhibit excellent mechanical strength.

Here, the method of measuring each physical property of the first ethylene-alpha olefin copolymer is the same as those described for the polyethylene composition, and thus a detailed description thereof will be omitted.

Meanwhile, the first ethylene-alpha olefin copolymer includes ethylene together with one or more alpha-olefins selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof.

Further, the first ethylene-alpha olefin copolymer may be a copolymer of ethylene and 1-octene.

The first ethylene-alpha olefin copolymer, when it is the above-described copolymer, may more easily implement the above-described physical properties. However, the type of the first ethylene-alpha olefin copolymer is not limited to the above-described type, and various types known in the technical field to which the present invention belongs may be provided, as long as they may exhibit the above-described physical properties.

Meanwhile, the first ethylene-alpha olefin copolymer having the above-described physical properties may be prepared in the presence of a metallocene catalyst.

Specifically, the first ethylene-alpha olefin copolymer may be prepared by copolymerizing ethylene and a comonomer in the presence of a catalyst composition including a first metallocene compound represented by the following Chemical Formula 1. 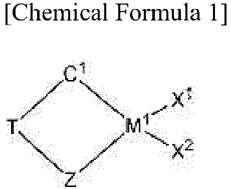 in Chemical Formula 1,
M¹ is a Group 4 transition metal;
X¹ and X² are the same as or different from each other, and each independently halogen, a nitro group, an amido group, a phosphine group, a phosphide group, a C1 to C30 hydrocarbyl group, a C1 to C30 hydrocarbyloxy group, a C2 to C30 hydrocarbyloxyhydrocarbyl group, - SiH₃, a C1 to C30 hydrocarbyl(oxy)silyl group, a C1 to C30 sulfonate group, or a C1 to C30 sulfone group;
Z is -O-, -S-, -NRₐ-, or -PRₐ-;
Rₐ is any one of hydrogen, a C1 to C20 hydrocarbyl group, a C1 to C20 hydrocarbyl(oxy)silyl group, and a C1 to C20 silylhydrocarbyl group;
T is 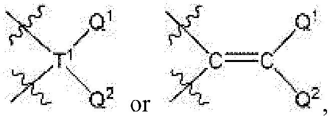
T¹ is C, Si, Ge, Sn, or Pb,
Q¹ and Q² are the same as or different from each other, and each independently any one of hydrogen, a C1 to C30 hydrocarbyl group, a C1 to C30 hydrocarbyloxy group, a C2 to C30 hydrocarbyloxyhydrocarbyl group, -SiH₃, a C1 to C30 hydrocarbyl(oxy)silyl group, a halogen-substituted C1 to C30 hydrocarbyl group, and -NR_{b}R_{c},
R_{b} and R_{c} are each independently any one of hydrogen and a C1 to C30 hydrocarbyl group, or are connected with each other to form an aliphatic or aromatic ring; and
C¹ is any one of ligands represented by the following Chemical Formulae 1a to 1d, 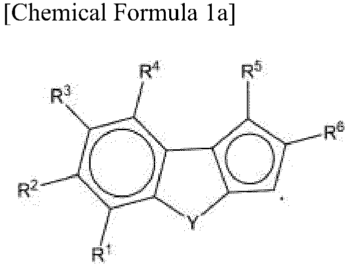 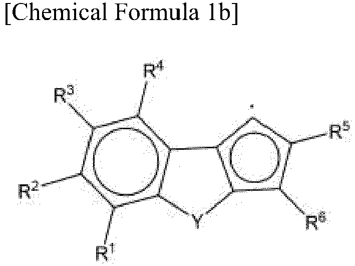 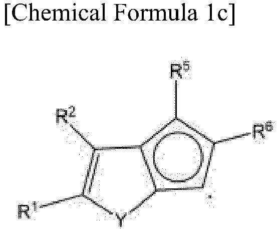 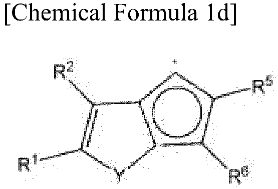
in Chemical Formulae 1a to 1d,
Y is O or S, and
R¹ to R⁶ are the same as or different from each other, and each independently any one of hydrogen, a C1 to C30 hydrocarbyl group, and a C1 to C30 hydrocarbyloxy group.

Unless otherwise specified herein, the following terms may be defined as follows.

The hydrocarbyl group is a monovalent functional group in which a hydrogen atom is removed from a hydrocarbon, and may include an alkyl group, an alkenyl group, an alkynyl group, an aryl group, an aralkyl group, an aralkenyl group, an aralkynyl group, an alkylaryl group, an alkenylaryl group, an alkynylaryl group, etc. The C1 to C30 hydrocarbyl group may be a C1 to C20 or C1 to C10 hydrocarbyl group. For example, the hydrocarbyl group may be a linear, branched, or cyclic alkyl. More specifically, the C1 to C30 hydrocarbyl group may be a linear, branched, or cyclic alkyl group such as a methyl group, an ethyl group, an n-propyl group, an iso-propyl group, an n-butyl group, an iso-butyl group, a tert-butyl group, an n-pentyl group, an n-hexyl group, an n-heptyl group, a cyclohexyl group, etc.; or an aryl group such as phenyl, biphenyl, naphthyl, anthracenyl, phenanthrenyl, or fluorenyl, etc. Moreover, it may be alkylaryl such as methylphenyl, ethylphenyl, methylbiphenyl, methylnaphthyl, etc., or arylalkyl such as phenylmethyl, phenylethyl, biphenylmethyl, naphthylmethyl, etc. It may also be alkenyl such as allyl, allyl, ethenyl, propenyl, butenyl, pentenyl, etc.

The hydrocarbyloxy group is a functional group in which the hydrocarbyl group is bound to oxygen. Specifically, the C1 to C30 hydrocarbyloxy group may be a C1 to C20 or C1 to C10 hydrocarbyloxy group. For example, the hydrocarbyloxy group may be a linear, branched, or cyclic alkyl. More specifically, the C1 to C30 hydrocarbyloxy group may be a linear, branched, or cyclic alkoxy group such as a methoxy group, an ethoxy group, an n-propoxy group, an iso-propoxy group, an n-butoxy group, an iso-butoxy group, a tert-butoxy group, an n-pentoxy group, an n-hexyloxy group, an n-heptoxy group and a cyclohexyloxy group; or an aryloxy group such as a phenoxy group and a naphthalenoxy group.

The hydrocarbyloxyhydrocarbyl group is a functional group in which one or more hydrogens of the hydrocarbyl group are substituted with one or more hydrocarbyloxy groups. Specifically, the C2 to C30 hydrocarbyloxyhydrocarbyl group may be a C2 to C20 or C2 to C15 hydrocarbyloxyhydrocarbyl group. For example, the hydrocarbyloxyhydrocarbyl group may be a linear, branched, or cyclic alkyl. More specifically, the C2 to C30 hydrocarbyloxyhydrocarbyl group may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, etc.; or an aryloxyalkyl group such as a phenoxyhexyl group, etc.

The hydrocarbyl(oxy)silyl group is a functional group in which one to three hydrogens of SiH₃ are substituted with one to three hydrocarbyl or hydrocarbyloxy groups. Specifically, the C1 to C30 hydrocarbyl(oxy)silyl group may be a C1 to C20, C1 to C15, C1 to C10, or C1 to C5 hydrocarbyl(oxy)silyl group. More specifically, the C1 to C30 hydrocarbyl(oxy)silyl group may be an alkylsilyl group such as a methylsilyl group, a dimethylsilyl group, a trimethylsilyl group, a dimethylethylsilyl group, a diethylmethylsilyl group, or a dimethylpropylsilyl group, etc.; an alkoxysilyl group such as a methoxysilyl group, a dimethoxysilyl group, a trimethoxysilyl group, or a dimethoxyethoxysilyl group, etc.; or an alkoxyalkylsilyl group such as a methoxydimethylsilyl group, a diethoxymethylsilyl group, or a dimethoxypropylsilyl group, etc.

The C1 to C20 silylhydrocarbyl group is a functional group in which one or more hydrogens of the hydrocarbyl group are substituted with a silyl group. The silyl group may be - SiH₃ or a hydrocarbyl(oxy)silyl group. Specifically, the C1 to C20 silylhydrocarbyl group may be a C1 to C15 or C1 to C10 silylhydrocarbyl group. More specifically, C1 to C20 silylhydrocarbyl group may be a silylalkyl group such as -CH₂-SiH₃, etc.; an alkylsilylalkyl group such as a methylsilylmethyl group, a methylsilylethyl group, a dimethylsilylmethyl group, a trimethylsilylmethyl group, a dimethylethylsilylmethyl group, a diethylmethylsilylmethyl group, or a dimethylpropylsilylmethyl group, etc.; or an alkoxysilylalkyl group such as a dimethylethoxysilylpropyl group, etc.

The halogen may be fluorine (F), chlorine (Cl), bromine (Br), or iodine (I).

The sulfonate group has a structure of -O-SO₂-R_{d}, and R_{d} may be a C1 to C30 hydrocarbyl group. Specifically, the C1 to C30 sulfonate group may be a methanesulfonate group, a phenylsulfonate group, etc.

The C1 to C30 sulfone group has a structure of -R^{e'}-SO₂-R^{e"}, wherein R^{e'} and R^{e"} may be the same as or different from each other, and may each independently be any one of C1 to C30 hydrocarbyl groups. Specifically, the C1 to C30 sulfone group may be a methylsulfonylmethyl group, a methylsulfonylpropyl group, a methylsulfonylbutyl group, or a phenylsulfonylpropyl group, etc.

In the present disclosure, "two neighboring substituents are connected with each other to form an aliphatic or aromatic ring" means that the atom(s) of two substituents and the atom(s) to which the two substituents are bound are connected with each other to form a ring. Specifically, examples in which R_{b} and R_{c} or R_{b'} and R_{c'} of -NR_{b}R_{c} or -NR_{b'}R_{c'} are connected with each other to form an aliphatic ring may include a piperidinyl group, etc., and examples in which R_{b} and R_{c} or R_{b'} and R_{c'} of -NR_{b}R_{c} or -NR_{b'}R_{c'} are connected with each other to form an aromatic ring may include a pyrrolyl group, etc.

Further, the Group 4 transition metal may be titanium (Ti), zirconium (Zr), hafnium (Hf), or rutherfordium (Rf), specifically, titanium (Ti), zirconium (Zr), or hafnium (Hf), and more specifically, zirconium (Zr), or hafnium (Hf), but is not limited thereto.

Further, the Group 13 element may be boron (B), aluminum (Al), gallium (Ga), indium (In), or thallium (Tl), and specifically, boron (B) or aluminum (Al), but is not limited thereto.

The above-mentioned substituents may be optionally substituted with one or more substituents selected from the group consisting of a hydroxyl group; halogen; a hydrocarbyl group; a hydrocarbyloxy group; a hydrocarbyl group or hydrocarbyloxy group containing one or more heteroatoms of Group 14 to 16 heteroatoms; a silyl group; a hydrocarbyl(oxy)silyl group; a phosphine group; a phosphide group; a sulfonate group; and a sulfone group within the range of exhibiting the same or similar effect as the desired effect.

In the present disclosure, 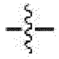 means a bond connected to another substituent.

Specifically, in Chemical Formula 1, Z is -NRₐ-, wherein Rₐ may be a C1 to C10 hydrocarbyl group. Specifically, Rₐ may be a linear or branched C1 to C6 alkyl group, and more specifically, a tert-butyl group.

Further, in Chemical Formula 1, T is 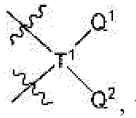 wherein T¹ is carbon (C) or silicon (Si), Q¹ and Q² may be each independently hydrogen, a C1 to C30 hydrocarbyl group, or a C1 to C30 hydrocarbyloxy group. Specifically, Q¹ and Q² may be each a C1 to C10 hydrocarbyl group or a C2 to C12 hydrocarbyloxyhydrocarbyl group. More specifically, Q¹ and Q² may be each a C1 to C6 alkyl group, or a C1 to C6 alkoxy-substituted C1 to C6 alkyl group. For example, Q¹ and Q² may be each independently hydrogen, methyl, ethyl, or tert-butoxy-substituted hexyl. More specifically, T¹ is silicon (Si), both Q¹ and Q² are methyl, or one of Q¹ and Q² is methyl and the other is tert-butoxy-substituted hexyl.

Specifically, the metallocene compound represented by Chemical Formula 1 may be represented by any one of the following Chemical Formulae 1-1 to 1-4.

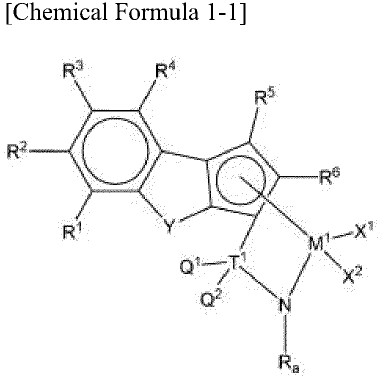

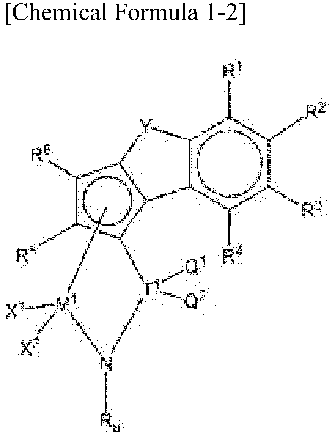

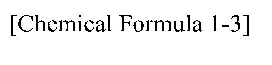

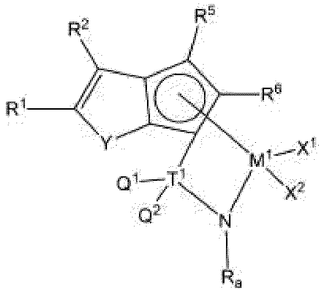

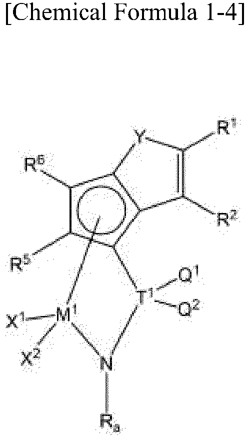

In Chemical Formulae 1-1 to 1-4, M¹, X¹, X², Rₐ, T¹, Q¹, Q², Y, and R¹ to R⁶ are the same as defined in Chemical Formula 1.

Further, in Chemical Formula 1, R¹ to R⁴ may be each hydrogen or a C1 to C10 hydrocarbyl group, and R⁵ and R⁶ may be each a C1 to C10 hydrocarbyl group. Specifically, R¹ to R⁴ may be each hydrogen or C1 to C10 alkyl, and R⁵ and R⁶ may be each C1 to C10 alkyl. More specifically, R¹ to R⁴ may be each hydrogen or methyl, and R⁵ and R⁶ may be methyl.

In Chemical Formula 1, M¹ may be titanium (Ti), zirconium (Zr), or hafnium (Hf), preferably, titanium (Ti).

In addition, in Chemical Formula 1, each of X¹ and X² may be halogen, a C1 to C10 alkyl group, or a C1 to C6 alkyl group, and specifically, chlorine or methyl.

In addition, in Chemical Formula 1, the second metallocene compound may be represented by any one of the following structural formulae.

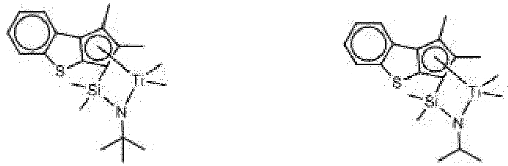

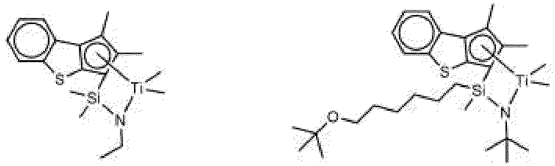

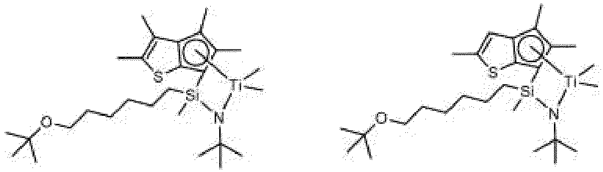

The metallocene compounds represented by the above structural formulae may be synthesized by applying known reactions, and a more detailed synthesis method may be understood with reference to Examples and Synthesis Examples.

As described above, the transition metal compound represented by Chemical Formula 1 used in the present invention controls the degree of introduction of alpha-olefin monomers in the copolymerization process due to the structural characteristics of the catalyst and exhibits the above-described density, resulting in excellent flowability and stretching processability.

In the present invention, the polymerization reaction may be performed by continuously polymerizing ethylene and alpha-olefin monomers while continuously introducing hydrogen in the presence of a catalyst composition containing one or more transition metal compounds represented by the Chemical Formula 1. Specifically, it may be performed while introducing hydrogen at 5 cc/min to 100 cc/min.

The hydrogen gas suppresses a rapid reaction of the transition metal compound at the early stage of polymerization, and serves to terminate the polymerization reaction. Accordingly, an ethylene/alpha-olefin copolymer having a narrow molecular weight distribution may be effectively produced by using the hydrogen gas and adjusting the amount thereof.

For example, the hydrogen may be introduced at 5 cc/min or more, or 7 cc/min or more, or 10 cc/min or more, or 15 cc/min or more, or 19 cc/min or more, and at 100 cc/min or less, or 50 cc/min or less, or 45 cc/min or less, or 35 cc/min or less, or 29 cc/min or less. When introduced under the above conditions, the ethylene/alpha-olefin copolymer to be produced may realize the above-mentioned physical properties.

When the hydrogen gas is introduced at less than 5 cc/min, the polymerization reaction is not uniformly terminated, making it difficult to prepare an ethylene/alpha-olefin copolymer having desired physical properties. When the hydrogen gas is introduced at more than 100 cc/min, the termination reaction occurs too quickly, and thus there is a concern that an ethylene/alpha-olefin copolymer having a very low molecular weight may be produced.

In addition, the polymerization reaction may be performed at 100°C to 200°C, and the crystallinity distribution and the molecular weight distribution in the ethylene/alpha-olefin copolymer may be more easily controlled by controlling the polymerization temperature together with the input amount of hydrogen. Specifically, the polymerization reaction may be performed at 100°C to 200°C, or 120°C to 180°C, or 130°C to 170°C, or 140°C to 160°C, but is not limited thereto.

In the present invention, a cocatalyst may be additionally used in the catalyst composition to activate the transition metal compound of Chemical Formula 1. The cocatalyst is an organometallic compound containing a Group 13 metal, and specifically, may include one or more selected from Chemical Formulae 2 to 4 below.

[Chemical Formula 2] R₈-[Al(R₇)-O]ₙ-R₉

in Chemical Formula 2,
R₇, R₈ and R₉ are each independently hydrogen, halogen, C₁₋₂₀ hydrocarbyl, or halogen-substituted C₁₋₂₀ hydrocarbyl, and
n is an integer of 2 or more,

   [Chemical Formula 3] D(R₁₀)₃

   in Chemical Formula 3,
   D is aluminum or boron, and
   R₁₀'s are each independently halogen, C₁₋₂₀ hydrocarbyl, C₁₋₂₀ hydrocarbyloxy, or halogen-substituted C₁₋₂₀ hydrocarbyl,

      [Chemical Formula 4] [L-H]⁺[W(A)₄]⁻ or [L]⁺[W(A)₄]⁻

      in Chemical Formula 4,
      L is a neutral or cationic Lewis base,
      H is a hydrogen atom,
      W is a group 13 element, and
      A's are each independently any one of C₁₋₂₀ hydrocarbyl; C₁₋₂₀ hydrocarbyloxy; and substituents in which one or more hydrogen atoms of these substituents are substituted with one or more substituents selected from halogen, C₁₋₂₀ hydrocarbyloxy, and C₁₋₂₀ hydrocarbyl(oxy)silyl.

Specifically, in Chemical Formula 4, [L-H]⁺ is a Bronsted acid.

For example, [L-H]⁺ is trimethylammonium; triethylammonium; tripropylammonium; tributylammonium; diethylammonium; trimethylphosphonium; or triphenylphosphonium, wherein [L]⁺ is N,N-diethylanilinium; or triphenylcarbonium.

In addition, in Chemical Formula 4, W may be B³⁺ or Al³⁺.

The compound represented by Chemical Formula 2 may function as an alkylating agent and an activating agent, the compound represented by Chemical Formula 3 may function as an alkylating agent, and the compound represented by Chemical Formula 4 may function as an activating agent.

More specifically, the compound of Chemical Formula 2 may be an alkylaluminoxane-based compound in which repeating units are bound in a linear, circular, or network shape, and specific examples thereof may include methylaluminoxane (MAO), ethylaluminoxane, isobutylaluminoxane, or tert-butylaluminoxane, etc. Non-limiting examples of the compound represented by Chemical Formula 2 may include methyl aluminoxane, ethyl aluminoxane, isobutyl aluminoxane, or tert-butyl aluminoxane, etc.

In addition, non-limiting examples of the compound represented by Chemical Formula 3 may include trimethylaluminum, triethylaluminum, triisobutylaluminum, tripropylaluminum, tributylaluminum, dimethylchloroaluminum, triisopropylaluminum, tri-sec-butylaluminum, tricyclopentyl aluminum, tripentyl aluminum, triisopentyl aluminum, trihexyl aluminum, trioctyl aluminum, ethyldimethyl aluminum, methyl diethyl aluminum, triphenyl aluminum, tri-p-tolyl aluminum, dimethyl aluminum methoxide, dimethyl aluminum ethoxide, etc.

In addition, non-limiting examples of the compound represented by Chemical Formula 4 may include trimethylammonium tetrakis(pentafluorophenyl)borate, triethylammonium tetrakis(pentafluorophenyl)borate, N,N-dimethylanilinium tetrakis(pentafluorophenyl)borate, N,N-dimethylanilinium n-butyltris(pentafluorophenyl)borate, N,N-dimethylanilinium benzyltris(pentafluorophenyl)borate, N,N-dimethylanilinium tetrakis(4-(t-butyldimethylsilyl)-2,3,5,6-tetrafluorophenyl)borate, N,N-dimethylanilinium tetrakis(4-(triisopropylsilyl)-2,3,5,6-tetrafluorophenyl) borate, N,N-dimethylanilinium pentafluorophenoxytris(pentafluorophenyl)borate, N,N-dimethyl-2,4,6-trimethylanilinium tetrakis(pentafluorophenyl)borate, anilinium tetrakis(pentafluorophenyl)borate, trimethylammonium tetrakis(2,3,4,6-tetrafluorophenyl)borate, N,N-dimethylanilinium tetrakis(2,3,4,6-tetrafluorophenyl)borate, hexadecyldimethylammonium tetrakis(pentafluorophenyl)borate, N-methyl-N-dodecylanilinium tetrakis(pentafluorophenyl)borate, methyldi(dodecyl)ammonium tetrakis(pentafluorophenyl)borate, etc.

Among the above compounds, the cocatalyst may be, more specifically, an alkylaluminoxane-based cocatalyst such as methylaluminoxane.

The amount of use of the cocatalyst may be appropriately adjusted according to the desired physical properties or effects of the hybrid supported metallocene catalyst.

The cocatalyst may be used in an appropriate amount so that the activation of the transition metal compound of Chemical Formula 1 may sufficiently proceed. The amount of use of the cocatalyst may be appropriately adjusted according to the desired physical properties or effects of the hybrid supported metallocene catalyst.

In the present disclosure, the transition metal compound of Chemical Formula 1 may be used in a state of being supported on a support.

When the transition metal compound of Chemical Formula 1 is supported on a support, a weight ratio of the transition metal compound and the support may be 1:10 to 1:1000, more specifically, 1:10 to 1:500. When the support and the transition metal compound are included within the above weight ratio, an optimal shape may be exhibited. In addition, when the cocatalyst is supported together on the support, a weight ratio of the cocatalyst and the support may be 1:1 to 1:100, more specifically, 1:1 to 1:50. When the cocatalyst and the support are included within the above weight ratio, it is possible to improve the catalyst activity and to optimize the microstructure of the polymer to be produced.

Meanwhile, the support may be silica, alumina, magnesia or a mixture thereof, or may be used in a state of containing highly reactive hydroxyl groups or siloxane groups on its surface by removing moisture from the surface after drying these materials at a high temperature. Further, the supports dried at a high temperature may further include oxide, carbonate, sulfate, or nitrate such as Na₂O, K₂CO₃, BaSO₄, and Mg(NO₃)₂, etc.

A drying temperature of the support may be preferably 200°C to 800°C, more preferably 300°C to 600°C, and most preferably 300°C to 400°C. When the drying temperature of the support is lower than 200°C, surface moisture may react with the cocatalyst due to excessive moisture. When it is higher than 800°C, pores on the surface of the support may be combined to reduce the surface area, and a lot of hydroxyl groups may be lost on the surface and only siloxane groups may remain, thus decreasing the reaction sites with the cocatalyst, which is not preferable.

Further, the amount of the hydroxyl groups on the surface of the support may be preferably 0.1 mmol/g to 10 mmol/g, more preferably 0.5 mmol/g to 5 mmol/g. The amount of the hydroxyl groups on the surface of the support may be controlled by the preparation method and conditions of the support, or drying conditions, for example, temperature, time, vacuum or spray drying, etc.

In addition, an organoaluminum compound is further introduced during the polymerization reaction to remove moisture from the reactor, and the polymerization reaction may proceed in the presence of the organoaluminum compound. Specific examples of such organoaluminum compounds may include trialkyl aluminum, dialkyl aluminum halide, alkyl aluminum dihalide, aluminum dialkyl hydride, or alkyl aluminum sesqui halide, etc. More specific examples thereof may include Al(C₂H₅)₃, Al(C₂H₅)₂H, Al(C₃H₇)₃, Al(C₃H₇)₂H, Al(i-C₄H₉)₂H, Al(C₈H₁₇)₃, Al(C₁₂H₂₅)₃, Al(C₂H₅)(C₁₂H₂₅)₂, Al(i-C₄H₉)(C₁₂H₂₅)₂, Al(i-C₄H₉)₂H, Al(i-C₄H₉)₃, (C₂H₅)₂AlCl, (i-C₃H₉)₂AlCl or (C₂H₅)₃Aₗ₂Cl₃, etc. These organoaluminum compounds may be continuously introduced to the reactor and may be added at about 0.1 mol to about 10 mol per 1 kg of reaction medium which is introduced to the reactor for adequate moisture removal.

In addition, the polymerization pressure may be about 1 Kgf/cm² to about 100 Kgf/cm², preferably about 1 Kgf/cm² to about 50 Kgf/cm², more preferably about 5 Kgf/cm² to about 30 Kgf/cm².

In addition, when the transition metal compound is used in a state of being supported on a support, the transition metal compound may be introduced after being dissolved or diluted in an aliphatic hydrocarbon solvent having 5 to 12 carbon atoms, for example, pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, etc. The solvent used herein is preferably used after removing a small amount of water or air, which acts as a catalyst poison, by treating with a small amount of alkyl aluminum. It is also possible to further use the cocatalyst.

As described, the first ethylene-alpha olefin copolymer may be prepared by copolymerizing ethylene and an alpha-olefin using the metallocene catalyst described above.

By the above preparation method, the first ethylene-alpha olefin copolymer having the above physical properties may be prepared.

### (b) Second ethylene-alpha olefin copolymer

The polyethylene resin composition according to the present invention may control the balance between the mechanical properties and the stretchability characteristics by blending the first ethylene-alpha olefin copolymer described above with the second ethylene-alpha olefin copolymer having excellent flowability and superior stretching stability and shrinkage resistance, thereby imparting characteristics suitable for the production of a biaxially stretched film maintaining mechanical properties, productivity, and stretching stability equivalent to or superior to those of the prior art, and having high shrinkage resistance, printability, and excellent transparency.

Specifically, the second ethylene-alpha olefin copolymer may be a high density polyethylene (HDPE) satisfying a density of 0.945 g/cm³ to 0.960 g/cm³, as measured at 23°C in accordance with ISO 1183-2. More specifically, the density of the second ethylene-alpha olefin copolymer may be 0.945 g/cm³ or more, or 0.946 g/cm³ or more, and 0.960 g/cm³ or less, or 0.958 g/cm³ or less, or 0.956 g/cm³ or less, or 0.955 g/cm³ or less, or 0.952 g/cm³ or less, or 0.948 g/cm³ or less.

Further, a number average molecular weight Mn of the second ethylene-alpha olefin copolymer may be 10,000 g/mol or more, and less than 20,000 g/mol. More specifically, the number average molecular weight Mn of the second ethylene-alpha olefin copolymer may be 10,000 g/mol or more, or 11,000 g/mol or more, or 11,500 g/mol or more, or 11,600 g/mol or more, and 20,000 g/mol or less, or less than 20,000 g/mol, or 18,000 g/mol or less, or 15,000 g/mol or less, or 14,500 g/mol or less, or 14,100 g/mol or less.

Further, the second ethylene-alpha olefin copolymer may have a melt index (MI_{2.16}) of 0.10 g/10 min to 2.00 g/10 min, as measured at 190°C under a load of 2.16 kg in accordance with ASTM D1238, and may have a weight average molecular weight Mw of 100,000 g/mol to 200,000 g/mol, and a molecular weight distribution Mw/Mn of 7.0 to 20.0.

More specifically, the melt index (MI_{2.16}) of the second ethylene-alpha olefin copolymer may be 0.10 g/10 min or more, or 0.20 g/10 min or more, 0.30 g/10 min or more, or 0.35 g/10 min or more, or 0.36 g/10 min or more, and 2.00 g/10 min or less, or 1.50 g/10 min or less, or 1.00 g/10 min or less, or 0.50 g/10 min or less, or 0.40 g/10 min or less, or 0.39 g/10 min or less.

This means that the weight average molecular weight of the second ethylene-alpha olefin copolymer is high and the content of high-molecular-weight components is high, thereby exhibiting excellent mechanical properties such as high tensile strength. Since the second ethylene-alpha olefin copolymer has a low melt index as described above, the polyethylene resin composition of the present invention including the same may satisfy excellent processability and crack resistance when manufactured for pipe use.

Further, the weight average molecular weight Mw of the second ethylene-alpha olefin copolymer may be more specifically 100,000 g/mol or more, or 120,000 g/mol or more, or 140,000 g/mol or more, or 145,000 g/mol or more, or 149,200 g/mol or more, and 200,000 g/mol or less, or 180,000 g/mol or less, or 170,000 g/mol or less, or 165,000 g/mol or less, or 161,000 g/mol or less.

Further, the molecular weight distribution of the second ethylene-alpha olefin copolymer may be 7.0 or more, or 10.0 or more, or 11.0 or more, or 11.4 or more, and 20.0 or less, or 18.0 or less, or 15.0 or less, or 13.0 or less, or 12.9 or less.

Since the second ethylene-alpha olefin copolymer of the present invention has the relatively high molecular weight and the narrow molecular weight distribution, relative to the low melt index, as described above, it may satisfy both excellent mechanical properties and tensile strength characteristics.

Meanwhile, in the present invention, the number average molecular weight (Mn), the weight average molecular weight (Mw), and the molecular weight distribution of the second ethylene-alpha olefin copolymer may be determined by measuring the weight average molecular weight (Mw) and the number average molecular weight (Mn) of polyethylene using gel permeation chromatography (GPC), respectively, and calculating the molecular weight distribution as a ratio (Mw/Mn) of the weight average molecular weight to the number average molecular weight.

Specifically, polyethylene samples were tested using a Polymer Laboratories PLgel MIX-B 300 mm-length column and Waters' PL-GPC220 instrument. A test temperature was 160°C, and 1,2,4-trichlorobenzene was used for a solvent at a flow rate of 1 mL/min. The sample was prepared at a concentration of 10mg/10mL, and then fed in an amount of 200 µL. Mw and Mn values were obtained using a calibration curve formed using polystyrene standards. 9 kinds of polystyrene standards were used, the polystyrene standards having a molecular weight of 2,000 / 10,000 / 30,000 / 70,000 / 200,000 / 700,000 / 2,000,000 / 4,000,000 / 10,000,000.

Further, the second ethylene-alpha olefin copolymer may include ethylene together with one or more alpha-olefins selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof.

More specifically, the second ethylene-alpha olefin copolymer may be a copolymer of ethylene and 1-hexene.

The second ethylene-alpha olefin copolymer may be prepared, but is not limited to, by copolymerizing ethylene and alpha olefin comonomer while introducing hydrogen gas in an amount of 150 ppm to 200 ppm, based on the total weight of ethylene, in the presence of a catalyst composition including a first metallocene compound represented by the following Chemical Formula 5 and a second metallocene compound represented by the following Chemical Formula 6. At this time, the alpha olefin comonomer may be introduced in an amount of 1% by weight to 3% by weight, based on the total weight of ethylene.

[Chemical Formula 5] (Cp¹R^{a})ₘ(Cp²R^{b})M²Z²₃₋ₘ

in Chemical Formula 5,
M² is a Group 4 transition metal;
Cp¹ and Cp² are each cyclopentadienyl, which is unsubstituted or substituted with C₁₋₂₀ hydrocarbon;
R^{a} and R^{b} are the same as or different from each other, and each independently hydrogen, C₁₋₂₀ alkyl, C₁₋₂₀ alkoxy, C₂₋₂₀ alkoxyalkyl, C₆₋₂₀ aryl, C₆₋₂₀ aryloxy, C₂₋₂₀ alkenyl, C₇₋₄₀ alkylaryl, C₇₋₄₀ arylalkyl, C₈₋₄₀ arylalkenyl, C₂₋₂₀ alkynyl, or substituted or unsubstituted C₂₋₂₀ heteroaryl containing one or more heteroatoms selected from the group consisting of N, O, and S, provided that at least one or more of R^{a} and R^{b} are not hydrogen;
each Z² is independently halogen, C₁₋₂₀ alkyl, C₂₋₂₀ alkenyl, C₇₋₄₀ alkylaryl, C₇₋₄₀ arylalkyl, C₆₋₂₀ aryl, substituted or unsubstituted C₁₋₂₀ alkylidene, a substituted or unsubstituted amino group, C₂₋₂₀ alkoxyalkyl, or C₇₋₄₀ arylalkoxy; and
m is 1 or 0; 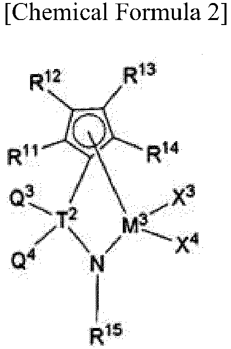 in Chemical Formula 6,
   M³ is a Group 4 transition metal,
   T² is carbon, silicon, or germanium,
   X³ and X⁴ are the same as or different from each other, and each independently halogen or C₁₋₂₀ alkyl,
   R¹¹ to R¹⁴ are the same as or different from each other, and each independently hydrogen, C₁₋₂₀ alkyl, C₂₋₂₀ alkenyl, C₆₋₂₀ aryl, C₇₋₂₀ alkylaryl, C₇₋₂₀ arylalkyl, or two or more neighboring groups of R¹¹ to R¹⁴ are connected to each other to form a substituted or unsubstituted aliphatic or aromatic ring, or a heteroaromatic ring containing any one or more selected from the group consisting of N, O, and S,
   Q³ and Q⁴ are the same as or different from each other, and each independently C₁₋₂₀ alkyl, C₂₋₂₀ alkenyl, C₆₋₃₀ aryl, or C₂₋₂₀ alkoxyalkyl, and
   R¹⁵ is C₁₋₂₀ alkyl, C₂₋₂₀ alkenyl, or C₆₋₃₀ aryl.

Meanwhile, unless otherwise specified herein, the following terms may be defined as follows.

The halogen may be fluorine (F), chlorine (Cl), bromine (Br), or iodine (I).

The C₁₋₂₀ alkyl group may be a linear, branched, or cyclic alkyl group. Specifically, the C₁₋₂₀ alkyl group may be a C₁₋₁₅ linear alkyl group; a C₁₋₁₀ linear alkyl group; a C₁₋₅ linear alkyl group; a C₃₋₂₀ branched or cyclic alkyl group; a C₃₋₁₅ branched or cyclic alkyl group; or a C₃₋₁₀ branched or cyclic alkyl group. More specifically, the C₁₋₂₀ alkyl group may be a methyl group, an ethyl group, an n-propyl group, an iso-propyl group, an n-butyl group, an iso-butyl group, a tert-butyl group, an n-pentyl group, an iso-pentyl group, a neo-pentyl group, a cyclohexyl group, etc.

The C₂₋₂₀ alkenyl group may be a linear, branched, or cyclic alkenyl group. Specifically, the C₂₋₂₀ alkenyl group may be a C₂₋₂₀ linear alkenyl group, a C₂₋₁₀ linear alkenyl group, a C₂₋₅ linear alkenyl group, a C₃₋₂₀ branched alkenyl group, a C₃₋₁₅ branched alkenyl group, a C₃₋₁₀ branched alkenyl group, a C₅₋₂₀ cyclic alkenyl group, or a C₅₋₁₀ cyclic alkenyl group. More specifically, the C₂₋₂₀ alkenyl group may be an ethenyl group, a propenyl group, a butenyl group, a pentenyl group, a cyclohexenyl group, etc.

The C₆₋₂₀ aryl refers to a monocyclic, bicyclic, or tricyclic aromatic hydrocarbon, and includes monocyclic or condensed aryl. Specifically, the C₆₋₂₀ aryl may be phenyl, biphenyl, naphthyl, anthracenyl, phenanthrenyl, or fluorenyl, etc.

The C₇₋₄₀ alkylaryl may refer to a substituent in which one or more hydrogens of the aryl are substituted with alkyl. Specifically, the C₇₋₄₀ alkylaryl may be methylphenyl, ethylphenyl, n-propylphenyl, iso-propylphenyl, n-butylphenyl, iso-butylphenyl, tert-butylphenyl, or cyclohexylphenyl, etc.

The C₇₋₄₀ arylalkyl may refer to a substituent in which one or more hydrogens of the alkyl are substituted with aryl. Specifically, the C₇₋₄₀ arylalkyl may be benzyl, phenylpropyl, or phenylhexyl, etc.

The C₆₋₂₀ aryloxy may be phenoxy, biphenoxy, naphthoxy, etc., but is not limited thereto.

The C₁₋₂₀ alkoxy group may be a methoxy group, an ethoxy group, a phenyloxy group, a cyclohexyloxy group, etc., but is not limited thereto.

The C₂₋₂₀ alkoxyalkyl group is a functional group in which one or more hydrogens of the alkyl group are substituted with an alkoxy group, and specifically, may include alkoxyalkyl groups such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, etc., but is not limited thereto.

The C₁₋₂₀ alkylsilyl group or the C₁₋₂₀ alkoxysilyl group is a functional group in which one to three hydrogens of -SiH₃ are substituted with one to three alkyl groups or alkoxy groups described above, and specifically, may include alkylsilyl groups such as a methylsilyl group, a dimethylsilyl group, a trimethylsilyl group, a dimethylethylsilyl group, a diethylmethylsilyl group, or a dimethylpropylsilyl group, etc.; alkoxysilyl groups such as a methoxysilyl group, a dimethoxysilyl group, a trimethoxysilyl group, or a dimethoxyethoxysilyl group, etc.; or alkoxyalkylsilyl groups such as a methoxydimethylsilyl group, a diethoxymethylsilyl group, or a dimethoxypropylsilyl group, etc., but is not limited thereto.

The C₁₋₂₀ silylalkyl group is a functional group in which one or more hydrogens of the alkyl group are substituted with a silyl group, and specifically, may include -CH₂-SiH₃, a methylsilylmethyl group, or a dimethylethoxysilylpropyl group, etc., but is not limited thereto.

The sulfonate group has a structure of -O-SO₂-R', wherein R' may be a C₁₋₂₀ alkyl group. Specifically, the C₁₋₂₀ sulfonate group may be a methanesulfonate group, or a phenylsulfonate group, etc., but is not limited thereto.

The heteroaryl is a C₂₋₂₀ heteroaryl containing one or more of N, O, and S as a heterogeneous element, and includes monocyclic or condensed heteroaryl. Specific examples thereof may include xanthene, thioxanthen, a thiophene group, a furan group, a pyrrole group, an imidazole group, a thiazole group, an oxazole group, an oxadiazole group, a triazole group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyrido-pyrimidinyl group, a pyrido-pyrazinyl group, a pyrazino-pyrazinyl group, an isoquinoline group, an indole group, a carbazole group, a benzoxazole group, a benzoimidazole group, a benzothiazole group, a benzocarbazole group, a benzothiophene group, a dibenzothiophene group, a benzofuranyl group, a phenanthroline group, an isoxazolyl group, a thiadiazolyl group, a phenothiazinyl group, a dibenzofuranyl group, etc., but are not limited thereto.

The above-mentioned substituents may be optionally substituted with one or more substituents selected from the group consisting of a hydroxyl group; halogen; an alkyl or alkenyl, aryl, alkoxy group; an alkyl or alkenyl, aryl, alkoxy group containing one or more heteroatoms of Group 14 to 16 heteroatoms; a silyl group; an alkylsilyl or alkoxysilyl group; a phosphine group; a phosphide group; a sulfonate group; and a sulfone group within the range of exhibiting the same or similar effects as the desired effects.

In addition, "two neighboring substituents are connected with each other to form an aliphatic or aromatic ring" means that the atom(s) of two substituents and the atom(s) to which the two substituents are bound are connected with each other to form a ring. Specifically, examples in which R₉ and R₁₀ of -NR₉R₁₀ are connected with each other to form an aliphatic ring may include a piperidinyl group, etc., and examples in which R₉ and R₁₀ of -NR₉R₁₀ are connected with each other to form an aromatic ring may include a pyrrolyl group, etc.

In the catalyst composition, the first metallocene compound represented by Chemical Formula 5 is a non-crosslinked compound including ligands of Cp¹ and Cp², and is advantageous for mainly producing a low molecular weight copolymer having a low SCB (short chain branch) content.

Specifically, in Chemical Formula 5, the ligands of Cp¹ and Cp² may be the same as or different from each other, and each may be cyclopentadienyl and substituted with one or more, or one to three C₁₋₁₀ alkyls. As the ligands of Cp¹ and Cp² have an unshared electron pair capable of acting as a Lewis base, high polymerization activity may be achieved. Particularly, since the ligands of Cp¹ and Cp² are cyclopentadienyl with relatively little steric hindrance, they exhibit high polymerization activity and low hydrogen reactivity, thereby polymerizing a polyethylene having a low molecular weight with high activity.

Further, the ligands of Cp¹ and Cp² may easily control properties such as chemical structure, molecular weight, molecular weight distribution, mechanical properties, transparency, etc. of the polyethylene to be prepared by controlling the degree of steric hindrance effect depending on the type of the substituted functional groups. Specifically, the ligands of Cp¹ and Cp² are substituted with R^{a} and R^{b}, respectively, wherein R^{a} and R^{b} are the same as or different from each other, and each may be independently hydrogen, C₁₋₂₀ alkyl, C₂₋₂₀ alkoxyalkyl, C₇₋₄₀ arylalkyl, or substituted or unsubstituted C₂₋₁₂ heteroaryl containing one or more heteroatoms selected from the group consisting of N, O, and S, and more specifically, C₁₋₁₀ alkyl, C₂₋₁₀ alkoxyalkyl, C₇₋₂₀ arylalkyl, or substituted or unsubstituted C₄₋₁₂ heteroaryl containing one or more heteroatoms selected from the group consisting of N, O, and S.

Further, M²Z²₃₋ₘ exists between the ligands of Cp¹ and Cp², and M²Z²₃₋ₘ may affect storage stability of metal complex. In order to more effectively ensure this effect, Z¹'s may be each independently halogen or C₁₋₂₀ alkyl, and more specifically, F, Cl, Br, or I. In addition, M² may be Ti, Zr or Hf; Zr or Hf; or Zr.

With regard to the first metallocene compound, in Chemical Formula 5, Cp¹ and Cp² may be each an unsubstituted or substituted cyclopentadienyl group, and R^{a} and R^{b} are each independently hydrogen, C₁₋₁₀ alkyl, C₂₋₁₀ alkoxyalkyl, or C₇₋₂₀ arylalkyl, wherein at least one of R^{a} and R^{b} is an alkoxyalkyl group such as t-butoxyhexyl group, more specifically, a substituent of -(CH₂)ₚ-OR^{c} (wherein R^{c} is a linear or branched alkyl group having 1 to 6 carbon atoms, and p is an integer of 2 to 4). This case shows a low conversion rate to the comonomer compared to other Cp-based catalysts not including the above substituent in the preparation of polyethylene using a comonomer, thereby preparing a low-molecular-weight polyethylene, in which the degree of copolymerization or comonomer distribution is controlled. In addition, when the first metallocene compound having the above structure is supported on a support, the -(CH₂)ₚ-OR^{c} group among the substituents may form a covalent bond through close interaction with the silanol group on the surface of the silica used as the support. Therefore, stable supported polymerization is possible.

The first metallocene compound represented by Chemical Formula 5 may be, for example, a compound represented by one of the following structural formulae, but is not limited thereto.

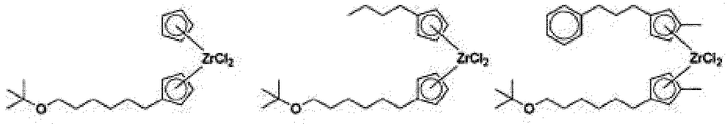

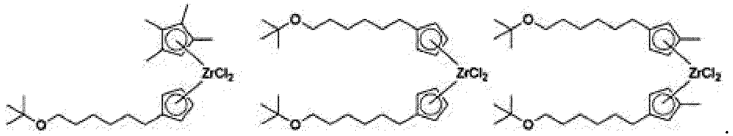

The first metallocene compound represented by Chemical Formula 5 may be synthesized by applying known reactions, and a more detailed synthesis method may be understood with reference to Examples.

Meanwhile, in one embodiment of the present invention, the second metallocene compound represented by Chemical Formula 6 includes an aromatic ring compound containing cyclopentadienyl or a derivative thereof and a nitrogen atom, and has a structure in which the aromatic ring compound and the nitrogen atom are crosslinked by a bridge group T²Q³Q⁴. The second metallocene compound having such a specific structure is applied to the polymerization reaction of polyethylene to exhibit high activity and copolymerizability, and may provide an olefin copolymer having a high molecular weight.

In particular, since the second metallocene compound represented by Chemical Formula 6 has a well-known structure of constrained geometry catalyst (CGC) in the structure, comonomer incorporation is excellent, and the distribution of the comonomer is controlled by the electronic and steric characteristics of the ligand. These properties control average ethylene sequence length (ASL) to increase the middle and high molecular weight regions in the molecular weight distribution, thereby increasing the tie molecule fraction and the entanglement of polymer chains. Accordingly, it is easy to prepare a polyethylene resin exhibiting long-term stability and processability together with excellent pipe resistance to internal pressure.

M³ of the metallocene compound represented by Chemical Formula 6 may be a Group 4 transition metal, and may be preferably titanium (Ti), zirconium (Zr), or hafnium (Hf).

Preferably, T² in Chemical Formula 6 may be silicon.

Preferably, X³ and X⁴ in Chemical Formula 6 may be each independently methyl or chlorine (Cl).

Preferably, R¹¹ to R¹⁴ in Chemical Formula 6 are the same as or different from each other, and may be each independently methyl or phenyl.

Preferably, two or more of R¹¹ to R¹⁴ adjacent to each other in Chemical Formula 6 are connected with each other to form a substituted or unsubstituted aliphatic or aromatic ring, or a heteroaromatic ring containing any one or more selected from the group consisting of N, O, and S. For example, in Chemical Formula 6, two or more of R¹¹ to R¹⁴ adjacent to each other are connected to form an aliphatic, aromatic, or heteroaromatic ring, thereby forming an indenyl group, a fluorenyl group, a benzothiophene group, or a dibenzothiophene group in which cyclopentadiene is fused. In addition, the indenyl group, fluorenyl group, benzothiophene group, and dibenzothiophene group may be substituted with one or more substituents.

Preferably, R¹⁵ to R¹⁶ in Chemical Formula 6 may be the same as or different from each other, and may be each independently methyl, ethyl, phenyl, propyl, hexyl, or tert-butoxyhexyl.

Preferably, R¹⁷ in Chemical Formula 6 may be methyl, ethyl, n-propyl, iso-propyl, n-butyl, or tert-butyl.

As the second metallocene compound capable of providing a polyethylene resin excellent in both long-term stability and processability as well as pipe resistance to internal pressure due to the more increased middle and high molecular weight regions, the metallocene compound of Chemical Formula 6 may be any one selected from the group consisting of the following compounds, but the present invention is not limited thereto:

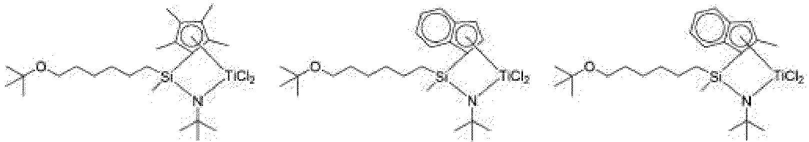

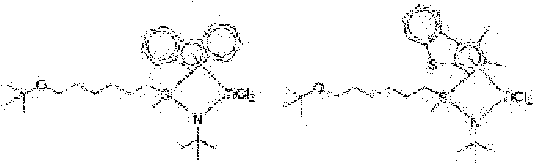

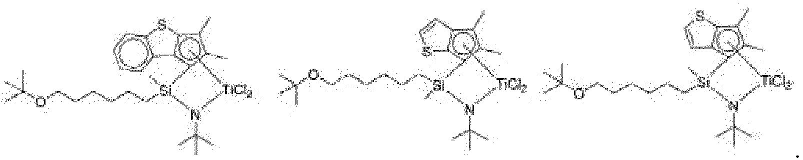

The second metallocene compound represented by Chemical Formula 6 may be synthesized by applying known reactions. Specifically, it may be prepared by connecting a nitrogen compound and a cyclopentadiene derivative with a bridge compound to prepare a ligand compound, and then introducing a metal precursor compound to perform metalation, but is not limited thereto, and a more detailed synthesis method may be understood with reference to Examples.

The second metallocene compound of Chemical Formula 6 has excellent activity and may polymerize a polyethylene resin having a high molecular weight. In particular, even when used by being supported on a support, it exhibits high polymerization activity, thereby preparing a polyethylene resin having an ultra-high molecular weight.

In addition, even when a polymerization reaction is performed with hydrogen in order to prepare a polyethylene resin having a high molecular weight along with a broad molecular weight distribution, the second metallocene compound of Chemical Formula 6 according to the present invention exhibits low hydrogen reactivity, and thus it is possible to polymerize a polyethylene resin having an ultra-high molecular weight with high activity. Therefore, even when used in combination with a catalyst having other characteristics, a polyethylene resin satisfying the characteristics of high molecular weight may be prepared without deterioration in the activity, and therefore, a polyethylene resin having a broad molecular weight distribution while including a high molecular weight polyethylene resin may be easily prepared.

As described above, in the catalyst composition, the first metallocene compound represented by Chemical Formula 5 may mainly contribute to making a low-molecular-weight copolymer having a low SCB content, and the second metallocene compound represented by Chemical Formula 6 may mainly contribute to making a high-molecular-weight copolymer having a high SCB content. More specifically, the catalyst composition exhibits high comonomer incorporation with respect to the comonomer in the high molecular weight region of the copolymer by the second metallocene compound, and low comonomer incorporation with respect to the comonomer in the low molecular weight region of the copolymer by the first metallocene compound. As a result, it is possible to prepare a polyethylene resin exhibiting excellent mechanical properties as well as excellent heat resistance by having a bimodal molecular weight distribution.

Particularly, by controlling the content ratio of the first and second metallocene compounds in the catalyst composition of the present invention, it is possible to achieve the above-described physical properties and to further enhance the improvement effect. Specifically, the second metallocene compound is included in the catalyst composition in a higher content than the first metallocene compound to increase the middle and high molecular weight regions in the molecule, thereby increasing the tie molecule fraction and the entanglement of polymer chains, and optimizing the ratio of the high molecular weight region and the low molecular weight region.

Specifically, the first and second metallocene compounds should be included in a molar ratio of 1:1 to 1:8. Preferably, the first and second metallocene compounds may be included in a molar ratio of 1:1 to 1:7, 1:1 to 1:6, or 1:1 to 1:5.5. When the first and second metallocene compounds are included in the above molar ratio, the balance between mechanical properties and stretchability of the polyethylene resin prepared using the same is controlled. Accordingly, it maintains mechanical properties, productivity, and stretching stability equal to or superior to those of the traditional ones, and may improve high shrinkage resistance, printability, and transparency.

Meanwhile, the first and second metallocene compounds have the above-described structural characteristics, thereby being stably supported on a support.

In this case, the first and second metallocene compounds are used in a state of being supported on the support. When used as a supported catalyst, the polymer to be prepared has excellent particle shape and bulk density, and the catalyst may be suitably used in traditional slurry polymerization or bulk polymerization, and gas phase polymerization process.

Specific examples of the support may include silica, alumina, magnesia, silica-alumina, or silica-magnesia, etc., and commonly, they may further include oxides, carbonates, sulfates, or nitrates such as Na₂O, K₂CO₃, BaSO₄, and Mg(NO₃)₂, etc. Among them, when the silica support is used, it has little catalyst released from the surface of the support in the propylene polymerization process, because the transition metal compound is supported by chemical bonding with a reactive functional group such as a siloxane group present on the surface of the silica support. As a result, when the polypropylene is prepared by slurry polymerization or gas phase polymerization, a fouling phenomenon, sticking to the wall surface of the reactor or with each other, may be minimized.

In addition, the support may be surface-modified by a calcination or drying process in order to increase supporting efficiency and to minimize leaching and fouling. Through the surface modification step as described above, moisture on the surface of the support, which inhibits the reaction with the component, may be removed, and the contents of reactive functional groups capable of chemical bonding with the supported components, for example, a hydroxyl group and a siloxane group, may be increased.

Specifically, the calcination or drying process of the support may be performed in a range from a temperature, at which moisture disappears from the surface of the support, to a temperature, at which reactive functional groups, particularly, hydroxyl groups (OH groups) present on the surface are completely eliminated. Specifically, the temperature may be 150°C to 600°C, or 200°C to 500°C. When the temperature during the calcination or drying of the support is low, lower than 150°C, the moisture removal efficiency is low, and as a result, there is a concern that the moisture remaining on the support may react with the cocatalyst to lower the supporting efficiency. On the contrary, when the drying or calcination temperature is excessively high, higher than 600°C, pores on the surface of the support may be combined with each other to reduce specific surface area, and many reactive functional groups such as hydroxyl groups or silanol groups on the surface may be lost, leaving only siloxane groups. Thus, there is a concern that reactive sites with the cocatalyst may be reduced.

When the first and second metallocene compounds are supported on a support, for example, when the support is silica, the first and second metallocene compounds may be supported in a total amount of 40 µmol or more, or 80 µmol or more, and 240 µmol or less, or 160 µmol or less, based on 1 g of silica. When supported within the above range, it may exhibit an appropriate supported catalyst activity, which may be advantageous in terms of maintaining the catalyst activity and economic feasibility.

In addition, the catalyst composition may further include a cocatalyst in terms of improving high activity and process stability. The cocatalyst is as described above.

In addition, the amount of use of the cocatalyst may be appropriately controlled depending on desired properties or effects of the catalyst and the resin composition. For example, when silica is used as the support, the cocatalyst may be supported in an amount of 8 mmol or more, or 10 mmol or more, and 25 mmol or less, or 20 mmol or less, based on the weight of the support, for example, 1 g of silica.

In addition, the catalyst composition may be used by itself for polymerization, or may be used in a prepolymerized state by contacting with ethylene monomers before the use in a polymerization reaction. In this case, the preparation method according to an embodiment of the present invention may further include a prepolymerization step of contacting the catalyst composition with ethylene monomers before preparing the polyethylene by a polymerization reaction.

In addition, the catalyst composition may be dissolved or diluted in an aliphatic hydrocarbon solvent having 5 to 12 carbon atoms, for example, pentane, hexane, heptane, nonane, decane, and an isomer thereof, an aromatic hydrocarbon solvent such as toluene and benzene, or a hydrocarbon solvent substituted with chlorine, such as dichloromethane and chlorobenzene, and then introduced into a polymerization reaction described below. The solvent used herein is preferably used after removing a small amount of water or air, which acts as a catalyst poison, by treating with a small amount of alkyl aluminum. It is also possible to further use the cocatalyst.

Meanwhile, the polymerization process may be performed by contacting ethylene and a comonomer in the presence of the above-described catalyst composition. In particular, the polymerization reaction may be performed in a single polymerization reactor.

Generally, in the traditional bimodal polymerization reaction, two or more multiple reactors are used depending on the number of catalysts, and a polymerization reaction is performed by injecting a catalyst into each of the two or more reactors, thereby producing polymers with different molecular weights, and then mixing the same. However, in this case, there is a problem that the uniformity is reduced due to the different molecular weights. Accordingly, in the present invention, two types of catalysts are supported in a hybrid manner on one support, and a monomodal polymerization reaction is performed in a single reactor, thereby polymerizing low- and high-molecular-weight polymers at the same time. As a result, a polymer with excellent uniformity may be prepared.

Further, the polymerization temperature may be 25°C to 500°C, preferably 25°C to 200°C, more preferably 50°C to 150°C. In addition, the polymerization pressure may be 1 kgf/cm² to 100 kgf/cm², preferably 1 kgf/cm² to 50 kgf/cm².

In addition, in the polymerization process, the input amount of alpha olefin comonomer may be 1% by weight to 3% by weight, based on the total weight of ethylene.

The input amount of alpha olefin comonomer affects the molecular weight and molecular structure of the second ethylene-alpha olefin copolymer to be finally prepared, together with the catalyst structure and the input amount of hydrogen gas. In the present invention, when the alpha olefin comonomer is introduced in the above-mentioned range of the input amount, the second ethylene-alpha olefin copolymer having a high molecular weight and a broad molecular weight distribution may be easily implemented. More specifically, the alpha olefin comonomer may be introduced in an amount of 1% by weight or more, or 1.2% by weight or more, or 1.5% by weight or more, or 1.6% by weight or more, and 3% by weight or less, or 2.5% by weight or less, or 2% by weight or less, or 1.8% by weight or less, based on the total weight of ethylene.

Further, the polymerization reaction may be performed by continuously polymerizing ethylene and alpha-olefin monomer while continuously introducing hydrogen in the presence of the catalyst composition.

The hydrogen gas suppresses a rapid reaction of the transition metal compound at the early stage of polymerization, and serves to terminate the polymerization reaction. Accordingly, an ethylene/alpha-olefin copolymer having a controlled molecular weight distribution may be effectively produced by using the hydrogen gas and controlling the amount thereof.

Specifically, in the present invention, the input amount of the hydrogen gas may be 150 ppm to 200 ppm, based on the total weight of ethylene. When the hydrogen gas is introduced in the above-mentioned range, the second ethylene-alpha olefin copolymer having a high molecular weight and a broad molecular weight distribution may be easily implemented. More specifically, the input amount of the hydrogen gas may be 150 ppm or more, or 155 ppm or more, or 160 ppm or more, and 200 ppm or less, or 180 ppm or less, or 170 ppm or less, or 165 ppm or less, based on the total weight of ethylene.

By the above preparation method, the second ethylene-alpha olefin copolymer having the above physical properties may be prepared.

### (Biaxially stretched film)

The polyethylene resin composition having the above physical properties may be used to manufacture a biaxially stretched film having excellent surface properties by improving melt fracture. Accordingly, the present invention provides a biaxially stretched film including the polyethylene resin composition.

The biaxially stretched film may be manufactured by a common film manufacturing method, except for using the polyethylene resin composition described above.

For example, in order to manufacture the biaxially stretched film according to the present disclosure, Bruckner's lab extruder line may be used (L/D ratio: 42, Screw diameter: 25 mm, Melt/T-Die temperature: 220°C) to produce a polyethylene resin composition sheet having a thickness of 0.75 mm. Thereafter, a polyethylene biaxially stretched film may be manufactured by biaxially stretching the polyethylene resin composition sheet with a size of 90 mm×90 mm in length and width using KARO 5.0 equipment. Detailed methods of manufacturing the film and conditions thereof are as described in Experimental Example to be described later.

In addition, the biaxially stretched film according to the present disclosure may further include an additive well known in the art, in addition to the above-described polyethylene resin composition. Specifically, such an additive may include a solvent, a heat stabilizer, an antioxidant, a UV absorber, a light stabilizer, a metal deactivator, a filler, a reinforcing agent, a plasticizer, a lubricant, an emulsifier, a pigment, an optical brightener, a flame retardant, an antistatic agent, a foaming agent, etc. The type of the additive is not particularly limited, and general additives well known in the art may be used.

The polyethylene biaxially stretched film according to one embodiment of the present disclosure, which is manufactured by the above method, may exhibit excellent surface properties.

### [Effect of the Invention]

A polyethylene resin composition according to the present disclosure may prevent occurrence of surface defects when manufacturing a biaxially stretched film by improving melt fracture. Accordingly, a biaxially stretched film having excellent surface properties may be manufactured using the polyethylene resin composition.

### [Brief Description of Drawings]

FIG. 1 is a molecular weight distribution graph obtained through gel permeation chromatography analysis of polyethylene resin compositions of Examples 1 and 2 and Comparative Example 2;
FIG. 2 is a graph showing the results of ARES analysis of the polyethylene resin compositions of Examples 1 and 2 and Comparative Example 2; and
FIG. 3 is a graph showing the results of observing the temperature at the onset of melt fracture of the polyethylene resin compositions of Examples 1 and 2 and Comparative Example 2.

### [Best Mode for Carrying Out the Invention]

Hereinafter, embodiments of the present invention will be described in more detail in the following Examples. However, the following Examples are only for illustrating the embodiments of the present invention, and are not intended to limit the present invention.

### <Preparation of Metallocene Compound>

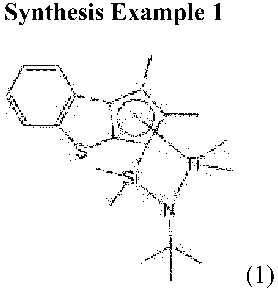

### (1) Preparation of ligand compound

A 1-benzothiophene solution was prepared by dissolving 4.0 g (30 mmol) of 1-benzothiophene in THF. Then, 14 mL (36 mmol, 2.5 M in hexane) of an n-BuLi solution and 1.3 g (15 mmol) of CuCN were added to the 1-benzothiophene solution. Subsequently, 3.6 g (30 mmol) of tigloyl chloride was slowly added to the above solution at -80°C, and the resulting solution was stirred at room temperature for about 10 hours. Thereafter, 10% HCl was poured into the above solution to quench the reaction, and the organic layer was separated with dichloromethane to obtain (2E)-1-(1-benzothien-2-yl)-2-methyl-2-buten-1-one in the form of a beige solid.

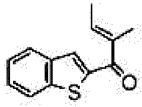

¹H NMR(CDCl₃): 7.85-7.82(m, 2H), 7.75(m, 1H), 7.44-7.34(m, 2H), 6.68(m, 1H), 1.99(m, 3H), 1.92(m, 3H)
34 mL of sulfuric acid was slowly added to the solution in which 5.0 g (22 mmol) of (2E)-1-(1-benzothien-2-yl)-2-methyl-2-buten-1-one prepared above was dissolved in 5 mL of chlorobenzene while vigorous stirring. Then, the solution was stirred at room temperature for about 1 hour. Thereafter, ice water was poured into the solution, the organic layer was separated with an ether solvent to obtain 4.5 g (91% yield) of 1,2-dimethyl-1,2-dihydro-3H-benzo[b]cyclopenta[d]thiophen-3-one in the form of a yellow solid.

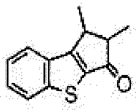

¹H NMR(CDCl₃): 7.95-7.91(m, 2H), 7.51-7.45(m, 2H), 3.20(m, 1H), 2.63(m, 1H), 1.59(d, 3H), 1.39(d, 3H)
570 mg (15 mmol) of NaBH₄ was added at 0°C to the solution in which 2.0 g (9.2 mmol) of 1,2-dimethyl-1,2-dihydro3H-benzo[b]cyclopenta[d]thiophen-3-one was dissolved in a mixed solvent of 20 mL of THF and 10 mL of methanol. Then, the solution was stirred at room temperature for about 2 hours. Thereafter, HCl was added to the solution to adjust the pH to 1, and the organic layer was separated with an ether solvent to obtain an alcohol intermediate.

A solution was prepared by dissolving the alcohol intermediate in toluene. Then, 190 mg (1.0 mmol) of p-toluenesulfonic acid was added to the solution, and refluxed for about 10 minutes. The resulting reaction mixture was separated by column chromatography to obtain 1.8 g (9.0 mmol, 98% yield) of 1,2-dimethyl-3H-benzo[b] cyclopenta[d]thiophene (ligand A) in the form of an orange-brown liquid.

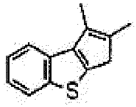

¹H NMR(CDCl₃): 7.81(d, 1H), 7.70(d, 1H), 7.33(t, 1H), 7.19(t, 1H), 6.46(s, 1H), 3.35(q, 1H), 2.14(s, 3H), 1.14(d, 3H)
4.65 g (15.88 mmol) of the compound prepared above was weighed and added to a 100 mL schlenk flask, and 80 mL of THF was introduced thereto. tBuNH₂ (4eq, 6.68 mL) was introduced at room temperature, and then allowed to react at room temperature for 3 days. After reaction, THF was removed, and the resultant was filtered with hexane. After drying the solvent, 4.50 g (86% yield) of N-tert-butyl-1-(1,2-dimethyl-3H-benzo[b]cyclopenta[d]thiophen-3-yl)-1,1-dimethylsilanamine was obtained in the form of yellow liquid.

¹H-NMR (500 MHz, CDCl₃): δ 7.99 (d, 1H), 7.83 (d, 1H), 7.35 (dd, 1H), 7.24 (dd, 1H), 3.49 (s, 1H), 2.37 (s, 3H), 2.17 (s, 3H), 1.27 (s, 9H), 0.19 (s, 3H), -0.17 (s, 3H).

### (2) Preparation of metallocene compound (1)

The ligand compound (1.06 g, 3.22 mmol/1.0 eq) and 16.0 mL (0.2 M) of MTBE were added in a 50 mL schlenk flask, followed by stirring. n-BuLi (2.64 mL, 6.60 mmol/2.05 eq, 2.5 M in THF) was added at -40°C, and allowed to react at room temperature overnight. Thereafter, MeMgBr (2.68 mL, 8.05 mmol/2.5 eq, 3.0 M in diethyl ether) was slowly added at -40°C, and TiCl₄ (2.68 mL, 3.22 mmol/1.0 eq, 1.0 M in toluene) was sequentially added, and allowed to react at room temperature overnight. Then, the reaction mixture was filtered through celite using hexane. After drying the solvent, 1.07 g (yield: 82%) of a brown solid was obtained.

¹H-NMR (500 MHz, CDCl₃): δ 7.99 (d, 1H), 7.68 (d, 1H), 7.40 (dd, 1H), 7.30 (dd, 1H), 3.22 (s, 1H), 2.67 (s, 3H), 2.05 (s, 3H), 1.54 (s, 9H), 0.58 (s, 3H), 0.57 (s, 3H), 0.40 (s, 3H), - 0.45 (s, 3H).

### Synthesis Example 2

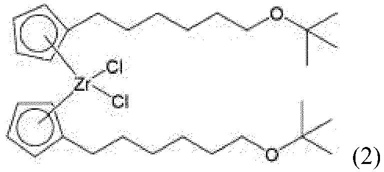

t-butyl-O-(CH₂)₆-Cl was prepared by a method described in a literature (Tetrahedron Lett. 2951(1988)) using 6-chlorohexanol, and reacted with Na(C₅H₅) [NaCp] to obtain t-butyl-O-(CH₂)₆-C₅H₅ (yield 60%, b.p. 80°C/0.1 mmHg).

In addition, t-butyl-O-(CH₂)₆-C₅H₅ was dissolved in tetrahydrofuran (THF) at -78°C, and n-BuLi was slowly added thereto, and then heated to room temperature and reacted for 8 hours. The lithium salt solution synthesized as described above was slowly added to a suspension solution of ZrCl₄(THF)₂ (170 g, 4.50 mmol)/THF(30 mL) at -78°C, and further reacted for 6 hours at room temperature. All volatiles were dried under vacuum and the resulting oily liquid material was filtered by adding hexane. The filtered solution was dried under vacuum, and hexane was added to induce precipitation at a low temperature (-20°C). The obtained precipitate was filtered at a low temperature to obtain a [t-butyl-O-(CH₂)₆-C₅H₄]₂ZrCl₂ compound in the form of a white solid (yield 92%).

¹H-NMR (300 MHz, CDCl₃): δ 6.28 (t, J=2.6 Hz, 2H), 6.19 (t, J=2.6 Hz, 2H), 3.31 (t, 6.6 Hz, 2H), 2.62 (t, J=8 Hz), 1.7 - 1.3 (m, 8H), 1.17 (s, 9H).

¹³C-NMR (CDCl₃): δ 135.09, 116.66, 112.28, 72.42, 61.52, 30.66, 30.31, 30.14, 29.18, 27.58, 26.00.

### Synthesis Example 3

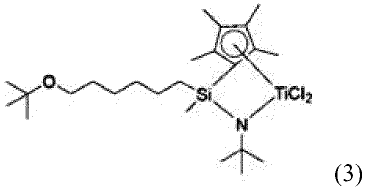

50 g of Mg(s) was added to a 10 L reactor at room temperature, and then 300 mL of THF was added. 0.5 g of I₂ was added, and the reactor temperature was maintained at 50°C. After the reactor temperature was stabilized, 250 g of 6-t-butoxyhexyl chloride was added to the reactor at a rate of 5 mL/min using a feeding pump. It was observed that the reactor temperature increased by 4°C to 5°C with the addition of 6-t-butoxyhexylchloride. 6-t-butoxyhexylchloride was continuously added and stirred for 12 hours. After reaction for 12 hours, a black reaction solution was obtained. 2 mL of the black solution was taken, and water was added thereto to obtain an organic layer, which was identified as 6-t-butoxyhexane through ¹H-NMR, indicating that Grignard reaction was well performed. Thus, 6-t-butoxyhexyl magnesium chloride was synthesized.

500 g of MeSiCl₃ and 1 L of THF were added to a reactor, and then the reactor temperature was cooled down to -20°C. 560 g of the 6-t-butoxyhexyl magnesium chloride synthesized above was added to the reactor at a rate of 5 mL/min using a feeding pump. After completing the feeding of Grignard reagent, the mixture was stirred for 12 hours while slowly raising the reactor temperature to room temperature. After reaction for 12 hours, it was found that white MgCl₂ salt was produced. 4 L of hexane was added thereto and the salt was removed through a labdori to obtain a filtered solution. The filtered solution thus obtained was added to the reactor, and then hexane was removed at 70°C to obtain a pale yellow liquid. The obtained liquid was identified as a desired compound methyl(6-t-butoxy hexyl)dichlorosilane through ¹H-NMR.

¹H-NMR (300 MHz, CDCl₃): δ 3.3 (t, 2H), 1.5 (m, 3H), 1.3 (m, 5H), 1.2 (s, 9H), 1.1 (m, 2H), 0.7 (s, 3H).

1.2 mol (150 g) of tetramethylcyclopentadiene and 2.4 L of THF were added to the reactor, and then the reactor temperature was cooled down to -20°C. 480 mL of n-BuLi was added to the reactor at a rate of 5 ml/min using a feeding pump. After n-BuLi was added, the mixture was stirred for 12 hours while slowly raising the reactor temperature to room temperature. After reaction for 12 hours, an equivalent of methyl(6-t-butoxy hexyl)dichlorosilane (326 g, 350 mL) was rapidly added to the reactor. The mixture was stirred for 12 hours while slowly raising the reactor temperature to room temperature. Then, the reactor temperature was cooled to 0°C again, and 2 equivalents of t-BuNH₂ was added. The mixture was stirred for 12 hours while slowly raising the reactor temperature to room temperature. After reaction for 12 hours, THF was removed. 4 L of hexane was added and the salt was removed through a labdori to obtain a filtered solution. The filtered solution was added to the reactor again, and hexane was removed at 70°C to obtain a yellow solution. The yellow solution thus obtained was identified as methyl(6-t-butoxyhexyl)(tetramethylCpH)t-butylaminosilane through ¹H-NMR.

TiCl₃(THF)₃ (10 mmol) was rapidly added to a dilithium salt of a ligand at -78°C, which was synthesized from n-BuLi and the ligand of dimethyl(tetramethylCpH)t-butylaminosilane synthesized in THF solution. While slowly heating the reaction solution from -78°C to room temperature, it was stirred for 12 hours. After stirring for 12 hours, an equivalent of PbCl₂ (10 mmol) was added to the reaction solution at room temperature, and then stirred for 12 hours. After stirring for 12 hours, a dark black solution having a blue color was obtained. THF was removed from the resulting reaction solution, and then hexane was added to filter the product. Hexane was removed from the filtered solution thus obtained, and then the product was identified as a desired compound (tBu-O-(CH₂)₆)(CH₃)Si(C₅(CH₃)₄)(tBu-N)TiCl₂ ([methyl(6-t-buthoxyhexyl)silyl(η5-tetramethylCp)(t-Butylamido)]TiCl₂) through ¹H-NMR.

¹H-NMR (300 MHz, CDCl₃): δ 3.3 (s, 4H), 2.2 (s, 6H), 2.1 (s, 6H), 1.8 ~ 0.8 (m), 1.4 (s, 9H), 1.2(s, 9H), 0.7 (s, 3H).

### <Preparation of Supported Catalyst>

### Catalyst Preparation Example 1: Preparation of hybrid supported metallocene catalyst

5.0 kg of a toluene solution was added to a 20 L sus high-pressure reactor, and the reactor temperature was maintained at 40°C. 1000 g of silica (manufactured by Grace Davison, SYLOPOL 948) dehydrated by applying vacuum at a temperature of 600°C for 12 hours was added to the reactor and sufficiently dispersed, and then 80 g of the metallocene compound (2) prepared in Synthesis Example 2 was dissolved in toluene and introduced thereto, followed by stirring at 40°C and 200 rpm for 2 hours to react. Thereafter, stirring was stopped, settling was allowed for 30 minutes, and the reaction solution was decanted.

2.5 kg of toluene was added to the reactor, and 9.4 kg of a 10 wt% methylaluminoxane (MAO)/toluene solution was added thereto, followed by stirring at 40°C and 200 rpm for 12 hours. After the reaction, stirring was stopped, settling was allowed for 30 minutes, and the reaction solution was decanted. After introducing 3.0 kg of toluene and stirring for 10 minutes, stirring was stopped and settling was allowed for 30 minutes, and the toluene solution was decanted.

3.0 kg of toluene was introduced to the reactor, and then 314 mL of the 29.2 wt% metallocene compound (3) prepared in Synthesis Example 3/toluene solution was introduced to the reactor, followed by stirring at 40°C and 200 rpm for 2 hours to react. At this time, a molar ratio of the metallocene compound (2) and the metallocene compound (3) was 1:5 (the number of moles of the first metallocene compound (2) : the number of moles of the second metallocene compound(3)). After the reactor temperature was lowered to room temperature, stirring was stopped, settling was allowed for 30 minutes, and the reaction solution was decanted.

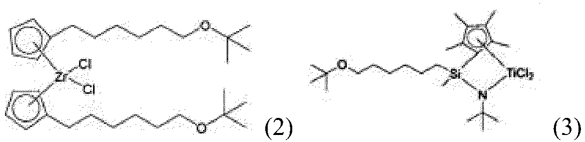

After introducing 2.0 kg of toluene to the reactor and stirring for 10 minutes, stirring was stopped and settling was allowed for 30 minutes, and the reaction solution was decanted.

3.0 kg of hexane was introduced to the reactor, the hexane slurry was transferred to a filter dryer, and the hexane solution was filtered. The resultant was dried under reduced pressure at 40°C for 4 hours to prepare a 910g-SiO₂ hybrid supported catalyst.

### Catalyst Preparation Example 2

3.0 kg of a toluene solution was added to a 20 L stainless steel (sus) high-pressure reactor, and the reactor temperature was maintained at 40°C. 500 g of silica (Grace Davison, SP2212) dehydrated by applying vacuum at a temperature of 600°C for 12 hours was introducing to the reactor and sufficiently dispersed, and then 2.78 kg of 10 wt % methylaluminoxane (MAO)/toluene solution was introducing thereto, followed by stirring at 80°C and 200 rpm for 15 hours or more.

After lowering the temperature of the reactor to 40°C, 60 g of the first metallocene compound (2)/toluene solution (7.8 wt % in toluene) prepared in Synthesis Example 2 was introduced to the reactor and stirred at 200 rpm for 1 hour. Subsequently, 230 g of the second metallocene compound (3)/toluene solution (7.8 wt % in toluene) prepared in Synthesis Example 3 was introduced to the reactor and stirred at 200 rpm for 1 hour. At this time, a molar ratio of the first metallocene compound (2) and the second metallocene compound (3) was 1:2.5 (the number of moles of the first metallocene compound (2): the number of moles of the second metallocene compound(3)).

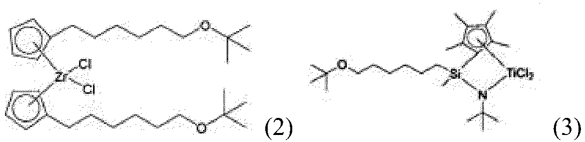

Next, 70 g of a cocatalyst (anilinium tetrakis(pentafluorophenyl)borate) was diluted in toluene, and then introduced to the reactor, followed by stirring at 200 rpm for 15 hours or more. After lowering the temperature of the reactor to room temperature, stirring was stopped, settling was allowed for 30 minutes, and the reaction solution was decanted.

The resulting toluene slurry was transferred to a filter dryer and filtered. After introducing 3.0 kg of toluene and stirring for 10 minutes, stirring was stopped and filtration was performed. 3.0 kg of hexane was introduced to the reactor and stirred for 10 minutes, then stirring was stopped and filtration was performed. The resultant was dried under reduced pressure at 50°C for 4 hours to prepare a 500g-SiO₂ supported catalyst.

### <Preparation of Ethylene-Alpha Olefin Copolymer>

### Preparation Example 1: Preparation of Ethylene/1-Octene Copolymer (PE-a)

A 1.5 L continuous process reactor was preheated at 120°C while introducing 5 kg/h of a hexane solvent and 0.31 kg/h of 1-octene. Triisobutylaluminum (Tibal, 0.045 mmol/min), the metallocene compound (1) obtained in Synthesis Example 1, and dimethylanilinium tetrakis(pentafluorophenyl)borate cocatalyst (2.6 µmol/min) were simultaneously introduced to the reactor. Subsequently, ethylene (0.87 kg/h) and hydrogen gas (10 cc/min) were introduced into the reactor and maintained at 160.0°C for 60 minutes or more in a continuous process at a pressure of 89 bar to carry out a copolymerization reaction, thereby obtaining an ethylene/1-octene copolymer (PE-a).

### Preparation Example 2: Preparation of Ethylene/1-Hexene Copolymer (PE-b)

An ethylene/1-hexene copolymer (PE-b) was slurry-polymerized in the presence of the hybrid supported catalyst prepared in Catalyst Preparation Example 1.

At this time, the polymerization reactor was a continuous polymerization reactor which is an isobutane (i-C4) slurry loop process, and a reactor volume was 140 L with a flow rate of about 7 m/s. Gases (ethylene, hydrogen) required for polymerization and a comonomer 1-hexene were constantly and continuously introduced, and the individual flow rates were adjusted according to target products. At this time, the ethylene input was 31.1 kg/hr, the 1-hexene input was adjusted to 2.5 wt%, based on ethylene, and the hydrogen input was adjusted to 56 ppm, based on ethylene. In addition, the concentrations of all gases and the comonomer 1-hexene in Preparation Example 1 were confirmed by on-line gas chromatograph. The supported catalyst was prepared and introduced as an isobutane slurry having a concentration of 4% by weight, the reactor pressure was maintained at about 40 bar, and the polymerization temperature was about 80°C.

### Preparation Examples 3 and 4: Preparation of Ethylene/1-Hexene Copolymer (PE-c and PE-d)

The hybrid supported catalyst prepared in Catalyst Preparation Example 2 was used, and ethylene/1-hexene copolymers (PE-c and PE-d) were polymerized in a single loop-type slurry reactor under the conditions shown in Table 1 below.

**[Table 1]**

| | Preparation Example 1 | Preparation Example 2 | Preparation Example 3 | Preparation Example 4 |
|---|---|---|---|---|
| Type of polymer | PE-a | PE-b | PE-c | PE-d |
| Type of catalyst | Synthesis Example 1 | Catalyst Preparation Example 1 | Catalyst Preparation Example 2 | Catalyst Preparation Example 2 |
| Input amount of ethylene (kg/hr) | 0.87 | 31.1 | 33.0 | 33.0 |
| Type of comonomer | 1-octene(1-C8) | 1-hexene(1-C6) | 1-hexene(1-C6) | 1-hexene(1-C6) |
| Input amount of comonomer | 0.31 kg/h | 2.5 wt% | 1.6 wt% | 1.8 wt% |
| Input amount of hydrogen | 10 cc/min | 56 ppm | 165 ppm | 160 ppm |
| Polymerization temperature (°C) | 160.0 | 80.0 | 93.0 | 93.0 |
| Catalyst activity (kgPE/g Cat.hr) | 5 | 5 | 5.5 | 6.0 |
| MI_{2.16}(g/10 min) | 6.0 | 0.6 | 0.39 | 0.36 |
| Density(g/cm³) | 0.900 | 0.941 | 0.948 | 0.946 |
| Mn(g/mol) | 30,000 | 28,000 | 11,600 | 14,100 |
| Mw(g/mol) | 68,000 | 114,000 | 149,200 | 160,920 |
| Mw/Mn | 2.3 | 4.1 | 12.9 | 11.4 |

In Table 1, the comonomer input unit "wt%" and the hydrogen input unit "ppm" are each based on the total weight of ethylene input.

### <Preparation of Polyethylene Resin Composition>

### Comparative Example 1

30% by weight of the ethylene/1-octene copolymer (PE-a) prepared in Preparation Example 1 and 70% by weight of the ethylene/1-hexene copolymer (PE-b) prepared in Preparation Example 2 were mixed as described in Table 2 below, and then extruded and granulated with a hopper of 18 rpm and a screw of 350 rpm at 220°C using a twin extruder (extruder: SMPLATEK's TEK30MHS, L/D ratio: 40, die diameter: 4 mm, extrusion conditions: hopper of 18 rpm, screw of 350 rpm, and 220°C), thereby preparing a polyethylene resin composition.

### Comparative Examples 2 and 3

Each polyethylene resin composition was prepared in the same manner as in Comparative Example 1, except that the polyethylenes prepared in Preparation Examples 3 and 4 were used, respectively.

### Examples 1 to 4

The polyethylenes prepared in Preparation Examples 1, 3, and 4 were used according to the compositions as described in Table 3 below, thereby preparing polyethylene resin compositions of Examples 1 to 4, respectively.

In detail, they were extruded and granulated with a hopper of 18 rpm and a screw of 350 rpm at 220°C using a twin extruder (extruder: SMPLATEK's TEK30MHS, L/D ratio: 40, die diameter: 4 mm, extrusion conditions: hopper of 18 rpm, screw of 350 rpm, and 220°C), thereby preparing each polyethylene resin composition.

**[Table 2]**

| | Comparative Example 1 | Comparative Example 2 | Comparative Example 3 |
|---|---|---|---|
| Composition | PE-a(30wt%)+ PE-b(70wt%) | PE-c | PE-d |

**[Table 3]**

| | Example 1 | Example 2 | Example 3 | Example 4 |
|---|---|---|---|---|
| Composition | PE-a(28wt%)+ PE-c (72wt%) | PE-a(17wt%) + PE-c(83wt%) | PE-a(30wt%) + PE-d(70wt%) | PE-a(20wt%) + PE-d(80wt%) |

In Tables 2 and 3, the unit "wt%" is based on the total weight of the polyethylene resin composition.

### Experimental Example 1

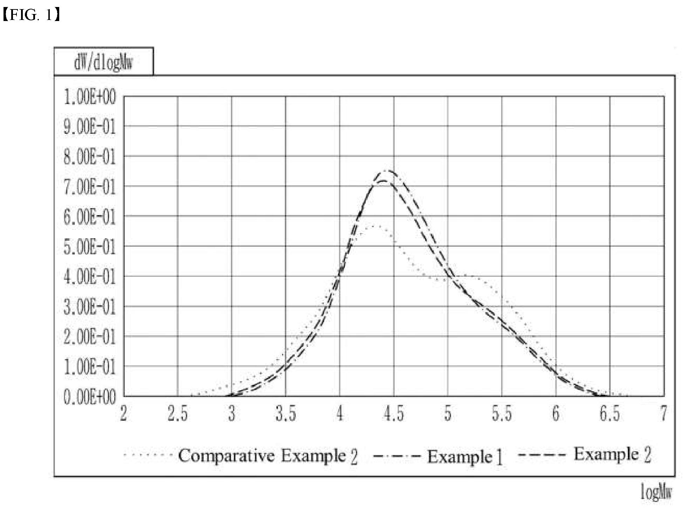

The physical properties of the polyethylene resin compositions prepared in Examples and Comparative Examples were measured by the methods described below, and the results are shown in Table below and FIGS. 1 to 3.

### (1) Density

The density (g/cm³) was measured in accordance with the American Society for Testing and Materials ASTM D 1505 standard.

### (2) Melt index

The melt index (MI_{2.16}) was measured under a load of 2.16 kg at 190°C in accordance with the American Society for Testing and Materials ASTM D1238 (Condition E, 190°C, 2.16 kg) (measurement equipment: Gottfert's MI-4), and expressed as the weight (g) of the polymer melted for 10 minutes.

### (3) Melt flow rate ratio (MFRR, MI_{21.6}/MI_{2.16})

MI_{2.16} (190°C, under a load of 2.16 kg) and MI_{21.6} (190°C, under a load of 21.6 kg) of the polyethylene resin composition were measured in accordance with the ASTM D1238 standard, respectively and a melt flow rate ratio (MFRR) was calculated by dividing the value of MI_{21.6} by MI_{2.16}. MFRR is commonly used as a value that indicates the shear thinning effect.

### (4) Weight average molecular weight (Mw) and Molecular weight distribution (PDI)

With regard to the polyethylene resin compositions according to Examples and Comparative Examples, their weight average molecular weight (Mw, g/mol) and number average molecular weight (Mn, g/mol) were determined through gel permeation chromatography (GPC) analysis, respectively, and the molecular weight distribution (Mw/Mn, PDI, polydispersity index) was calculated by dividing the weight average molecular weight determined above by the number average molecular weight.

In detail, Waters' PL-GPC220 instrument was used as the gel permeation chromatography (GPC) instrument, and a Polymer Laboratories PLgel MIX-B 300 mm-length column was used. At this time, the test temperature was 160°C, and 1,2,4-trichlorobenzene was used for a solvent at a flow rate of 1 mL/min. Each ethylene-alpha olefin copolymer sample prepared above was pretreated by dissolving in 1,2,4-trichlorobenzene containing 0.0125% of BHT at 160°C for 3 hours using a GPC analyzer (PL-GP220), and the sample was prepared at a concentration of 32 mg/10 mL, and then fed in an amount of 200 µL. Mw and Mn values were obtained using a calibration curve formed using polystyrene standards. 9 kinds of polystyrene standards were used, the polystyrene standards having a weight average molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

The molecular weight distribution curves (x-axis: the logarithmic value (logMw) of the weight average molecular weight (Mw)(g/mol), y-axis: the molecular weight distribution (dW/dlogMw) with respect to the logarithmic value) of the polyethylene resin compositions of Examples 1 and 2, and Comparative Example 2, obtained from the results of gel permeation chromatography analysis, are shown in FIG. 1.

### (5) Bimodality triangular area (BMTA)

With regard to the polyethylene compositions of Examples 1 to 3 and Comparative Examples 1 to 4, the bimodality triangular area (BMTA) was measured by the following method.

In detail, the weight average molecular weight (Mw, g/mol) was measured using gel permeation chromatography (GPC, manufactured by Water) as described above in accordance with the American Society for Testing and Materials ASTM D 6474 standard, and the area of BMTA (Bimodality triangular area) was measured on a logarithmic graph for the weight average molecular weight (Mw) of the polyethylene thus measured, i.e., on a GPC curve graph in which the x-axis is log MW and the y-axis is dw/dlogMw.

Here, the BMTA (Bimodality triangular area) corresponds to a triangular area formed by connecting three coordinates on the GPC curve, in which the three coordinates are each defined by the maximum intensity coordinate (X-axis: a, Y-axis: d) of the largest peak (Peak_{low}) among the low molecular weight fractions having a log Mw of less than 5.0 of the peak maximum intensity, the maximum intensity coordinate (X-axis: b, Y-axis: e) of the largest peak (Peak_{high}) among the high molecular weight fractions having a log Mw of 5.0 or more of the peak maximum intensity, and the coordinate (X-axis: c, Y-axis: f) of the intersection point of the low molecular weight fraction including Peak_{low} and the high molecular weight fraction including Peak_{high}. In other words, the area of the BMTA (Bimodality triangular area), which is the area of the triangle connecting the maximum intensity coordinate (X-axis: a, Y-axis: d) of the low molecular weight fraction peak (Peak_{low}), the maximum intensity coordinate (X-axis: b, Y-axis: e) of the high molecular weight fraction peak (Peak_{high}), and the coordinate (X-axis: c, Y-axis: f) of the intersection point of these coordinates, was determined by the following Equation 1. [Equation 1] $BMTA = \frac{1}{2} \left|\left(ae+bf+cd\right)-\left(db+ec+fa\right)\right|$ in Equation 1,
ae represents the product of the maximum intensity X-axis coordinate value of the low molecular weight fraction and the maximum intensity Y-axis coordinate value of the high molecular weight fraction,
bf represents the product of the maximum intensity X-axis coordinate value of the high molecular weight fraction and the Y-axis coordinate value of the intersection point,
cd represents the product of the X-axis coordinate value of the intersection point and the maximum intensity Y-axis coordinate value of the low molecular weight fraction,
db represents the product of the maximum intensity Y-axis coordinate value of the low molecular weight fraction and the maximum intensity X-axis coordinate value of the high molecular weight fraction,
ec represents the product of the maximum intensity Y-axis coordinate value of the high molecular weight fraction and the X-axis coordinate value of the intersection point, and
fa represents the product of the Y-axis coordinate value of the intersection point and the maximum intensity X-axis coordinate value of the low molecular weight fraction.

The detailed method is as follows.
- Performing peak deconvolution from the Mw curve obtained through GPC analysis (Agilent PL-GPC 220)
   : Curve fitting using Gaussian probability function
   : Separating peaks into low molecular weight fractions (log Mw of 5.0 or less of peak maximum intensity) and high molecular weight fractions (log Mw of 5.0 or more of peak maximum intensity)
   : Selecting the peaks with the largest area among the low molecular weight fractions and the peak with the largest area among the high molecular weight fractions
- The area is determined from the triangle obtained by drawing a line between the points, each corresponding to the maximum intensity of the selected low molecular weight fraction and the maximum intensity of the high molecular weight fraction, and the point corresponding to the intersection point of each curve, and this is defined as BMTA.
- When the maximum intensity coordinate of the low molecular weight fraction is defined as (a, d), the maximum intensity coordinate of the high molecular weight fraction is defined as (b, e), and the coordinate of the intersection point is defined as (c, f), the calculation formula of BMTA is as in Equation 1 described above.

Here, when the low molecular weight fraction and the high molecular weight fraction are not separated on the GPC curve graph of the polyethylene composition, or when the log Mw value of the intersection point is not between the log Mw values of the maximum intensities of the low molecular weight fraction and the high molecular weight fraction (c > a, b or c < a, b), BMTA is defined as 0.

The BMTA values thus determined are shown in Table 2 below. A larger BMTA value indicates a higher degree of bimodal separation on the GPC curve, meaning that the low molecular weight region is larger, and accordingly, indicating excellent processability.

### (6) Complex viscosity (Pa·S)

The complex viscosity (Pa·s) of the polyethylene resin composition was measured at 230°C and an angular frequency of 500 rad/s using a rotational rheometer, ARES-G2 (manufactured by TA).

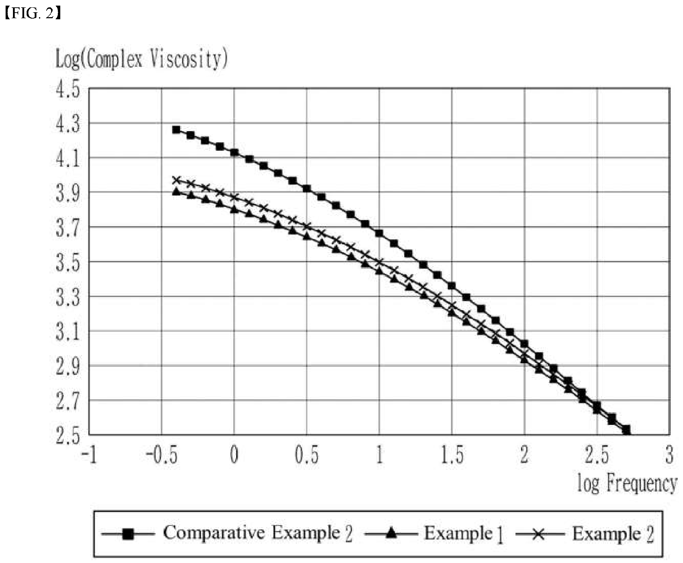

In addition, from the experimental results for the polyethylene resin compositions of Examples 1 and 2 and Comparative Example 2, a graph for the change in complex viscosity according to the frequency (x-axis: logarithmic value of frequency (Log(Frequency)), y-axis: logarithmic value of complex viscosity (Log(complex viscosity))) is shown in FIG. 2.

### (7) Shear viscosity (Pa·S)

The shear viscosity was measured at 230°C and a shear rate of 1/1000 sec using a capillary rheometer.

In detail, the shear viscosity (Pa s) was measured at a capillary die size (die length (L) = 10 mm, die diameter (D) = 2 mm, [L/D] = 10/2), a temperature of 230°C, and a shear rate of 1/1000 sec using RHEO-TESTER 2000 equipment manufactured by Gottfert.

### (8) Shear rate_{onset of M.F} (MF_{on_set})(1/s)

Shear rate_{onset of M.F} is the shear rate (1/s) at which melt fracture occurs.

In accordance with ASTM D 3835, the shear viscosity (Pa·s) of the polyethylene resin composition was measured during strand extrusion using a capillary rheometer while varying the shear rate.

From the results, a graph for the change in the shear viscosity according to the shear rate was obtained, and then the point where the slope in the shear rate/shear viscosity curve rapidly changed due to the increased instability of the shear viscosity was defined as the onset of melt fracture, and the shear rate at this time was determined as shear rate_{onset of M.F} or MF_{on_set}.

In detail, the surface of the extruded polyethylene resin composition strand was visually observed while varying the shear rate to 10^{2.0}, 10^{2.2}, 10^{2.4}, 10^{2.6}, 10^{2.8}, 10^{2.9}, 10^{2.95}, and 10^{2.30} s⁻¹ using RHEO-TESTER 2000 equipment manufactured by Gottfert. The shear viscosity at the starting point where unevenness of the strand surface occurred was measured. At this time, the shape of the orifice was a round hole type with a hole length of 10 mm, a diameter of 2 mm, a run in angle of 180°, and a measurement temperature of 230°C.

### (9) MF_{on_set} Stress (Pa)

The shear viscosity (Pa·s) at the starting point where unevenness of the strand surface occurred, i.e. at the point where melt fracture occurred, measured at (8) Shear rate_{onset of M.F} (MF_{on_set}), and the shear rate at that time (shear rate_{onset of M.F}) (1/s) were used to obtain MF_{on_set} Stress (Pa) according to Equation 2 below. [Equation 2] 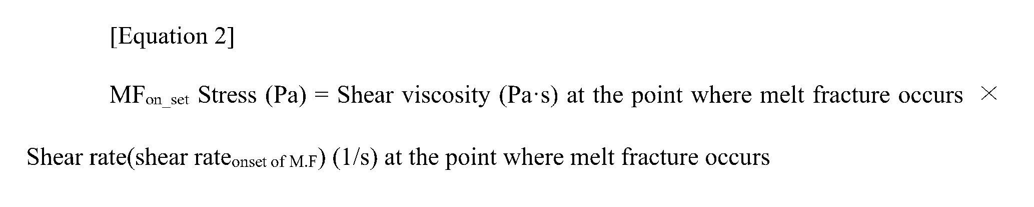 MFon_set Stress (Pa) = Shear viscosity (Pa·s) at the point where melt fracture occurs × Shear rate(shear rateonset of M.F) (1/s) at the point where melt fracture occurs

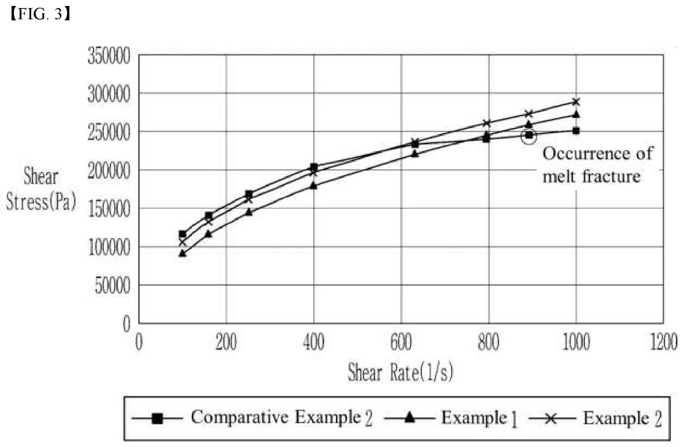

In addition, changes in the shear stress of the polyethylene resin compositions of Examples 1 and 2 and Comparative Example 2 were measured during strand extrusion using a capillary rheometer while varying the shear rate. In the shear rate ranging from 100 s⁻¹ to 1000 s⁻¹, strands were taken at 8 points, and melt fracture was visually examined. The results are shown in FIG. 3.

**[Table 4]**

| | Unit | Example 1 | Example 2 | Example 3 | Example 4 |
|---|---|---|---|---|---|
| MI_{(2.16 kg)} | g/10 min | 0.61 | 0.53 | 0.7 | 0.5 |
| MFRR_{(21.6/2.16)} | - | 81 | 89 | 79 | 88 |
| Density | g/cm³ | 0.936 | 0.940 | 0.935 | 0.940 |
| Type of molecular weight distribution curve | - | unimodal | unimodal | unimodal | unimodal |
| BMTA | - | 0.09 | 0.10 | 0.09 | 0.10 |
| Mw | g/mol | 114,500 | 120,900 | 110,500 | 117,300 |
| PDI | - | 5.65 | 6.64 | 5.54 | 6.43 |
| Complex viscosity @230°C | Pa·s | 330 | 344 | 332 | 345 |
| Shear viscosity @230°C | Pa·s | 272 | 289 | 283 | 293 |
| MF_{on_set} @230°C | 1/s | 1,000 or more | 1,000 or more | 1,000 or more | 1,000 or more |
| MF_{on_set} Stress @230°C | Pa | 265,000 or more | 265,000 or more | 265,000 or more | 265,000 or more |

**[Table 5]**

| | Unit | Comparative Example 1 | Comparative Example 2 | Comparative Example 3 |
|---|---|---|---|---|
| MI_{(2.16 kg)} | g/10 min | 1.13 | 0.39 | 0.36 |
| MFRR_{(21.6/2.16)} | - | 37 | 99 | 96 |
| Density | g/cm³ | 0.931 | 0.948 | 0.946 |
| Type of molecular weight distribution curve | - | unimodal | bimodal | bimodal |
| BMTA | - | 0.01 | 0.20 | 0.19 |
| Mw | g/mol | 108,400 | 149,290 | 160,920 |
| PDI (Mn/Mw) | - | 3.85 | 12.85 | 11.37 |
| Complex viscosity @230°C | Pa·s | 480 | 343 | 348 |
| Shear viscosity @230°C | Pa·s | 374 | 251 | 260 |
| MF_{on_set} @230°C | 1/s | 398 | 891 | 891 |
| MF_{on_set} Stress @230°C | Pa | 245,667 | 245,375 | 253,337 |

As a result of the experiment, it was confirmed that melt fracture was improved only when the molecular weight distribution became broad, the viscosity was low, and the unimodal shape was maintained, and the effect of improving melt fracture may not be achieved when having the bimodal shape. In addition, in the case of Examples 1 to 4 showing the improved melt fracture, the occurrence of stains on the film surface may be minimized in high-speed production, and therefore, it is expected that a film with excellent surface properties may be manufactured.

## Claims

1. A polyethylene resin composition comprising one or more polyethylenes and satisfying the following requirements of (a1) to (a4):
(a1) a melt flow rate ratio (MI_{21.6}/MI_{2.16}, ASTM D1238, 190°C): 60 to 120
(a2) a density (ASTM D1505): 0.920 g/cm³ to 0.950 g/cm³
(a3) a molecular weight distribution: 5.50 to 15.00
(a4) a molecular weight distribution type when a molecular weight distribution curve is plotted using a logarithmic value (logMw) of a weight average molecular weight (Mw) (g/mol) on the x-axis and a molecular weight distribution (dW/dlogMw) with respect to the logarithmic value on the y-axis through gel permeation chromatography analysis: unimodal.

2. The polyethylene resin composition of claim 1, wherein the polyethylene resin composition has a weight average molecular weight of 110,000 g/mol to 130,000 g/mol.

3. The polyethylene resin composition of claim 1, wherein the polyethylene resin composition has a complex viscosity of 400 Pa·s or less, as measured under conditions of 230°C and 500 rad/s using a rotational rheometer.

4. The polyethylene resin composition of claim 1, wherein the polyethylene resin composition has a shear viscosity of 300 Pa·s or less, as measured under conditions of 230°C and 1000 s⁻¹ using a capillary rheometer.

5. The polyethylene resin composition of claim 1, wherein the polyethylene resin composition has a shear rate of 1000 s⁻¹ or more at the onset of melt fracture, as measured at 230°C using a capillary rheometer.

6. The polyethylene resin composition of claim 1, wherein the polyethylene resin composition has a stress of 265,000 Pa or more at the onset of melt fracture, as measured at 230°C using a capillary rheometer.

7. The polyethylene resin composition of claim 1, wherein the polyethylene resin composition has a Bimodal Triangular Area (BMTA) of 0.05 to 0.15, determined from gel permeation chromatography analysis.

8. The polyethylene resin composition of claim 1, wherein the polyethylene resin composition has a melt index (MI_{2.16}, ASTM D1238, 190°C, 2.16 kg) of 0.10 g/10 min to 2.00 g/10 min.

9. The polyethylene resin composition of claim 1, wherein the polyethylene resin composition comprises
(a) a first ethylene-alpha olefin copolymer having a density of 0.870 g/cm³ to 0.920 g/cm³ and a number average molecular weight Mn of 20,000 g/mol or more, and
(b) a second ethylene-alpha olefin copolymer having a density of 0.945 g/cm³ to 0.960 g/cm³ and a number average molecular weight Mn of 10,000 g/mol or more and less than 20,000 g/mol;
wherein the first ethylene-alpha olefin copolymer and the second ethylene-alpha olefin copolymer are different from each other.

10. The polyethylene resin composition of claim 9, wherein the first ethylene-alpha olefin copolymer is comprised in an amount of 10% by weight to 40% by weight, and the second ethylene-alpha olefin copolymer is comprised in an amount of 60% by weight to 90% by weight, based on the total weight of the polyethylene resin composition.

11. The polyethylene resin composition of claim 9, wherein the first ethylene-alpha olefin copolymer has a melt index (MI_{2.16}, ASTM D1238, 190°C, under a load of 2.16 kg) of 3.0 g/10 min to 10.0 g/10 min, a weight average molecular weight of 60,000 g/mol or more and less than 95,000 g/mol, and a molecular weight distribution of 2.0 or more and less than 3.5.

12. The polyethylene resin composition of claim 9, wherein the first ethylene-alpha olefin copolymer is a copolymer of ethylene and 1-octene.

13. The polyethylene resin composition of claim 9, wherein the second ethylene-alpha olefin copolymer has a melt index (MI_{2.16}, ASTM D1238, 190°C, under a load of 2.16 kg) of 0.10 g/10 min to 2.00 g/10 min, a weight average molecular weight of 100,000 g/mol to 200,000 g/mol, and a molecular weight distribution of 7.0 to 20.0.

14. The polyethylene resin composition of claim 9, wherein the second ethylene-alpha olefin copolymer is a copolymer of ethylene and 1-hexene.

15. A biaxially stretched film comprising the polyethylene resin composition of claim 1.
